# EUROPÄISCHE PATENTANMELDUNG

(11) **EP 4 018 825 A1**
(43) Veröffentlichungstag der Anmeldung: **29.06.2022**
(21) Anmeldenummer: 22155369.6
(22) Anmeldetag: 19.08.2015
(51) Int. Cl.: A01M 25/00

(54) **VORRICHTUNG ZUR HALTERUNG EINES KÖDERS, INSBESONDERE EINES KÖDERS FÜR NAGETIERE**

(30) Priorität: 05.09.2014 DE 102014112804
(62) Teilanmeldung aus: 15753032.0
(71) Anmelder: Buchstaller, Jürgen, 90475 Nürnberg (DE)
(72) Erfinder: Buchstaller, Jürgen, 90475 Nürnberg (DE)
(74) Vertreter: Hafner & Kohl PartmbB

(57) **Zusammenfassung**

Vorrichtung (1) zur Halterung eines Köders (2), insbesondere eines Köders für Nagetiere, umfassend:
- ein Gehäuseteil (3), wobei das Gehäuseteil (3) wenigstens eine, insbesondere axiale, Durchgangsöffnung (9) aufweist, durch welche ein Zugang in einen gehäuseteilseitigen Innenraum möglich ist,
- wenigstens einen Schließkörper (15), welcher einen Grundkörper und wenigstens einen, insbesondere grundkörperseitigen, Köderaufnahmebereich zur Aufnahme wenigstens eines Köders (2) aufweist, wobei der Schließkörper (15) relativ zu dem Gehäuseteil (3) bewegbar gelagert ist, wobei der Schließkörper (15) in einer Offenstellung derart von dem Gehäuseteil (3) weg bewegt ist, dass die wenigstens eine Durchgangsöffnung (9) freigegeben ist, und in einer Schließstellung derart gegen das Gehäuseteil (3) bewegt ist, dass die wenigstens eine Durchgangsöffnung (9) verschlossen ist.

## Beschreibung

Die Erfindung betrifft eine Vorrichtung zur Halterung eines Köders, insbesondere eines Köders für Nagetiere.

Derartige Vorrichtungen sind zur Schädlingsbekämpfung, d. h. insbesondere zur Bekämpfung von Nagetieren, wie z. B. Mäusen und Ratten, welche sich z. B. in von Wasser durchströmten Kanälen bzw. Leitungen, d. h. insbesondere Abwasser-, Regenwasser- oder Schmutzwasserkanälen und/oder Kabelkanälen, bzw. entsprechenden Kanal- bzw. Leitungsschächten, aufhalten und dort beträchtliche Schäden, z. B. an abwassertechnischen und sonstigen infrastrukturellen Anlagen bzw. Einrichtungen, anrichten können, vorgesehen. Entsprechende Vorrichtungen haltern deshalb, typischerweise schädlingsspezifische, Köder, welche besondere Gifte bzw. Wirkstoffe enthalten, die auf verschiedenartige Weise ein Ableben der Schädlinge herbeiführen und/oder eine Vermehrung der Schädlinge verhindern.

Die in den Ködern enthaltenen Gifte bzw. Wirkstoffe stellen in der Regel für Mensch und Natur ein Gefährdungspotential dar, so dass darauf zu achten ist, dass entsprechende Köder nicht in das Grundwasser gelangen und dieses kontaminieren. Diese Möglichkeit besteht bei herkömmlichen Vorrichtungen im Falle von großen Wassermengen bzw. hohen Wasserständen z. B. Kanälen bzw. Kanalschächten, was insbesondere nach einem Starkregen der Fall ist.

Der Erfindung liegt daher die Aufgabe zugrunde, eine verbesserte Vorrichtung zur Halterung eines Köders, insbesondere eines Köders für Nagetiere, anzugeben.

Die Aufgabe wird durch eine Vorrichtung der eingangs genannten Art gelöst, welche sich erfindungsgemäß auszeichnet durch:
ein Gehäuseteil, wobei das Gehäuseteil wenigstens eine, insbesondere axiale, Durchgangsöffnung aufweist, durch welche ein Zugang in einen gehäuseteilseitigen Innenraum möglich ist,
- wenigstens einen Schließkörper, welcher einen Grundkörper und wenigstens einen, insbesondere grundkörperseitigen, Köderaufnahmebereich zur Aufnahme wenigstens eines Köders aufweist, wobei der Schließkörper relativ zu dem Gehäuseteil bewegbar gelagert ist, wobei der Schließkörper in einer Offenstellung derart von dem Gehäuseteil weg bewegt ist, dass die wenigstens eine Durchgangsöffnung freigegeben ist, und in einer Schließstellung derart gegen das Gehäuseteil bewegt ist, dass die wenigstens eine Durchgangsöffnung verschlossen ist.

Das erfindungsgemäße Prinzip betrifft eine besonders ausgebildete Vorrichtung zur Halterung eines Köders für Schädlinge, d. h. insbesondere eines Köders für Nagetiere, wie z. B. Mäuse und Ratten. Der Köder enthält bestimmte, typischerweise schädlingsspezifische, Substanzen, wie z. B. Gifte bzw. Wirkstoffe, die auf verschiedenartige Weise ein Ableben der Schädlinge herbeiführen und/oder eine Vermehrung der Schädlinge verhindern. Im Weiteren wird allein der Begriff Schädling verwendet. Hierunter sind insbesondere Nagetiere, wie z. B. Mäuse und Ratten, zu verstehen.

Die erfindungsgemäße Vorrichtung umfasst ein Gehäuseteil. Das Gehäuseteil ist im Allgemeinen an oder in einer Umgebung, in welcher es mit Wasser, insbesondere Regenwasser, jedoch auch, industriellem Abwasser, Mischwasser, Oberflächenwasser etc., und/oder anderen flüssigen Medien in Kontakt geraten kann, anordenbar oder angeordnet. Grundsätzlich ist das Gehäuseteil an solchen Orten anordenbar oder angeordnet, an welchen die Möglichkeit einer Kontamination von Wasser und/oder anderen flüssigen Medien mit den in dem in der Vorrichtung gehalterten Köder enthaltenen Substanzen denkbar ist. Dies betrifft insbesondere Orte, an welchen Wasser bzw. flüssige Medien grundsätzlich vorhanden sind oder sich Wasser bzw. flüssige Medien ansammeln können.

Das Gehäuseteil kann sonach z. B. an oder in bestimmten Bauwerken bzw. Bauwerksteilen respektive Gebäuden bzw. Gebäudeteilen im Hoch- und/oder Tiefbaubereich, wie z. B. Über- oder Unterführungen, Garagen, Kellern, Tankanlagen, Silos etc. anordenbar oder angeordnet sein. Selbstverständlich kann das Gehäuseteil auch an sonstigen Vorkehrungen, welche mit Wasser, insbesondere Regenwasser, in Kontakt geraten können, wie z. B. Abfallbehältern, Bepflanzungen, d. h. z. B. Bäumen, Einfriedungen, insbesondere Mauern oder Zäunen, Haltestellen für öffentliche oder private Transportmittel, Telefonzellen, Straßenbeleuchtungen, Verteiler- bzw. Versorgungskästen, anordenbar oder angeordnet sein.

Als konkretes Beispiel kann das Gehäuseteil z. B. in einen Kanal bzw. einen Kanalschacht, wie z. B. einen Abwasserkanalschacht und/oder einen Kabelkanalschacht, anordenbar bzw. einsetzbar sein. In dem Kanal bzw. Kanalschacht befindet sich typischerweise Wasser bzw. Abwasser respektive kann der Kanal bzw. Kanalschacht zumindest zeitweise von Wasser bzw. Abwasser durchströmt sein. Im Weiteren wird allein der Begriff Kanalschacht verwendet. Hierunter ist ein Teil einer Wasser führenden Einrichtung, wie z. B. einer Kanalisation für Wasser, d. h. z. B. Abwasser, Regenwasser, Schmutzwasser, bzw. Versorgungsleitungen etc. zu verstehen.

Um eine stabile und sichere Anordnung des Gehäuseteils, zu realisieren, weist dieses zweckmäßigerweise Befestigungsmittel auf, über welche es, insbesondere lösbar, an einem Drittgegenstand, wie z. B. einer Wandung eines Kanalschachts bzw. einer kanalschachtseitigen Steigeinrichtungen, wie z. B. kanalschachtseitigen Steigeisen, befestigbar ist. Das oder die Befestigungsmittel können z. B. hakenförmig ausgebildet sein, um das Gehäuseteil und somit die Vorrichtung insgesamt an oder in dem Drittgegenstand, d. h. z. B. in einer Wandung des Kanalschachts respektive entsprechenden Steigeinrichtungen, zu verankern. Selbstverständlich kann das Gehäuseteil alternativ oder ergänzend auch auf einem Untergrund angeordnet, d. h. befestigt, sein.

Die Vorrichtung respektive das Gehäuseteil kann selbstverständlich auch an oder in Transport- bzw. Verkehrsmitteln, wie z. B. Schiffen, anordenbar oder angeordnet sein.

Das Gehäuseteil ist typischerweise aus einem korrosionsstabilen Material, wie z. B. einem rostfreien Stahl(blech) und/oder Kunststoff gebildet. Unterschiedliche Abschnitte des Gehäuseteils können aus unterschiedlichen Materialien gebildet sein. Insbesondere für die Ausführung des oder eines Abschnitts des Gehäuseteils aus Kunststoff gilt, dass hier ein transparentes Kunststoffmaterial verwendet werden kann, um ein, z. B. zum Zwecke der Überprüfung eines Köderanbisses, erforderliches Einblicken in das Innere des Gehäuseteils zu gewähren.

Das Gehäuseteil ist insbesondere hohlzylindrisch ausgebildet, d. h. sein Inneres bildet einen zylindrischen Innenraum, welcher als Aufnahmeraum für bestimmte Komponenten der Vorrichtung dienen kann, bzw. in welchem bestimmte Komponenten der Vorrichtung aufnehmbar oder aufgenommen sind.

Das Gehäuseteil kann, z. B. an einer Stirnseite, über ein Deckelelement verschließbar oder verschlossen sein, so dass über ein Entfernen des Deckelelements eine Zugangsmöglichkeit in das Innere des Gehäuseteils, d. h. in den gehäuseteilseitigen Innenraum, geschaffen werden kann. Das Deckelelement kann einen Gewindeabschnitt, das Gehäuseteil kann einen hierzu gegengleichen Gewindeabschnitt aufweisen, so dass das Deckelelement mit dem Gehäuseteil verschraubt werden kann.

Das Gehäuseteil weist wenigstens eine Durchgangsöffnung, durch welche ein Zugang in das Innere des Gehäuseteils bzw. den gehäuseteilseitigen Innenraum möglich ist. Die Durchgangsöffnung definiert einen unterhalb dieser liegenden unteren Bereich des Gehäuseteils und einen oberhalb dieser liegenden oberen Bereich des Gehäuseteils.

Die erfindungsgemäße Vorrichtung umfasst ferner einen Schließkörper. Der Schließkörper umfasst einen Grundkörper und wenigstens einen, insbesondere grundkörperseitigen, Köderaufnahmebereich zur Aufnahme wenigstens eines Köders. Der Köderaufnahmebereich dient sonach als Lagerstelle zur Lagerung wenigstens eines Köders. Um den Köder zu erreichen, muss ein Schädling sonach zu dem bzw. auf den Schließkörper, insbesondere zu dem bzw. auf den schließkörperseitigen Grundkörper, gelangen. Dies ist, wie sich im Weiteren noch ergibt, typischerweise nur möglich, wenn sich der Schließkörper in einer Offenstellung befindet.

Der Köderaufnahmebereich kann beispielsweise durch wenigstens eine abschnittsweise Vertiefung des Grundkörpers des Schließkörpers gebildet sein. Ausgehend von dem beispielhaften Fall einer rotationssymmetrischen Geometrie des Schließkörpers, insbesondere des Grundkörpers, kann es sich bei dem Köderaufnahmebereich z. B. um eine ringscheibenförmige oder scheibenförmige Vertiefung handeln. Prinzipiell können die Abmessungen, d. h. insbesondere die Form, der den Köderaufnahmebereich bildenden Vertiefung an die Abmessungen, d. h. insbesondere die Form, eines in dem Köderaufnahmebereich aufzunehmenden Köders angepasst sein, so dass sich eine lage- bzw. positionsstabile Aufnahme des Köders ergibt. Selbstverständlich kann der Köderaufnahmebereich mehrere Abteilungen aufweisen, welche jeweils der Aufnahme eines Köders dienen. Wiederum können die Abmessungen, d. h. insbesondere die Form, der Abteilungen an die Abmessungen, d. h. insbesondere die Form, eines in den jeweiligen Abteilungen aufzunehmenden Köders angepasst sein. Es können mehrere separate oder miteinander in Verbindung, d. h. ineinander übergehende, Vertiefungen vorgesehen sein.

Selbstverständlich ist es grundsätzlich auch möglich, den Köder an einem nicht mit einer einen Köderaufnahmebereich bildenden Vertiefung versehenen Grundkörper anzuordnen. Der Köder kann lose oder befestigt an bzw. auf dem Grundkörper angeordnet sein. Eine Befestigung des Köders an bzw. auf dem Grundkörper kann sich z. B. durch ein Aufkleben ergeben.

Die konstruktive Ausgestaltung des Schließkörpers betreffend, ist es möglich, dass der Grundkörper des Schließkörpers einen mit diesem über wenigstens einen Verbindungssteg verbundenen, zu dem Grundkörper beabstandeten Lagerungsabschnitt zur Lagerung des Schließkörpers an dem Gehäuseteil umfasst. Der Lagerungsabschnitt ist sonach über den Verbindungssteg mit dem Grundkörper verbunden. Diese Verbindung kann lösbar sein, d. h. sowohl der Grundkörper als auch der Lagerungsabschnitt können, z. B. durch form- und/oder kraftschlüssige Verbindungsarten, wie z. B. Klemm-, Rast- oder Steckverbindungen, mit dem Verbindungssteg lösbar verbunden sein. Selbstverständlich ist es auch denkbar, dass der Schließkörper einstückig bzw. monolithisch ausgebildet ist.

Der Schließkörper lässt sich über den Lagerungsabschnitt an dem Gehäuseteil lagern bzw. haltern. Die Lagerung bzw. Halterung des Schließkörpers an dem Gehäuseteil erfolgt dabei typischerweise über ein Einhängen des Lagerungsabschnitts in den gehäuseteilseitigen Innenraum. Der Lagerungsabschnitt übergreift dabei entsprechende die Durchgangsöffnung radial begrenzende gehäuseteilseitige Ränder bzw. Wandungselemente.

Die Lagerung bzw. Halterung des Schließkörpers an dem Gehäuseteil ist typischerweise lösbar, d. h. der Schließkörper kann bei Bedarf von dem Gehäuseteil entfernt und bei Bedarf wieder an diesem gelagert bzw. gehaltert werden. Hieraus ergibt sich eine einfache Montierbarkeit bzw. Demontierbarkeit der Vorrichtung, was z. B. im Hinblick auf Service- und/oder Reparaturarbeiten zweckmäßig ist. Entsprechend ist der Lagerungsabschnitt vorzugsweise so bemessen, dass er durch Kippbewegungen bzw. Verkippen des Schließkörpers relativ zu dem Gehäuseteil durch die gehäuseteilseitige Durchgangsöffnung bewegbar ist.

Der Lagerungsabschnitt kann ferner mit wenigstens einer Sicherungskontur und das Gehäuseteil mit wenigstens einer hierzu gegengleich ausgebildeten Gegensicherungskontur versehen sein. Die lagerungsabschnittseitige Sicherungskontur und die gehäuseteilseitige Gegensicherungskontur wirken in der Schließstellung des Schließkörpers derart zusammen, dass der Schließkörper gegenüber bezüglich der Zentralachse des Gehäuseteils radialen Verschiebebewegungen gesichert gelagert ist. Typischerweise greift die lagerungsabschnittseitige Sicherungskontur in der Schließstellung des Schließkörpers dabei formschlüssig in die gehäuseteilseitige Gegensicherungskontur, oder umgekehrt.

Dies kann konstruktiv beispielsweise derart umgesetzt sein, dass die wenigstens eine oder wenigstens eine lagerungsabschnittseitige Sicherungskontur durch einen von dem Lagerungsabschnitt bezüglich der Zentralachse des Schließkörpers axial abragenden, insbesondere kalotten- oder keilförmigen, Vorsprung und die wenigstens eine oder wenigstens eine gehäuseteilseitige Gegensicherungskontur durch eine, insbesondere kalotten- oder keilförmige, Ausbuchtung oder Ausnehmung gebildet ist. Denkbar ist es auch, dass die wenigstens eine oder wenigstens eine lagerungsabschnittseitige Sicherungskontur durch eine, insbesondere kalotten- oder keilförmige, Ausbuchtung oder Ausnehmung und die wenigstens eine oder wenigstens eine gehäuseteilseitige Gegensicherungskontur durch einen von dem Gehäuseteil bezüglich der Zentralachse des Gehäuseteils axial abragenden, insbesondere kalotten- oder keilförmigen, Vorsprung gebildet ist. In allen Fällen ist ein, insbesondere formschlüssiges, Ineinandergreifen entsprechender Sicherungskonturen und Gegensicherungskonturen möglich, was den genannten Effekt einer gegenüber radialen Verschiebebewegungen verschiebesicheren Lagerung des Schließkörpers in der Schließstellung ergibt.

Der Schließkörper ist relativ zudem Gehäuseteil bewegbar gelagert. Der Schließkörper kann dabei zwischen einer Offenstellung und einer Schließstellung, sowie gegebenenfalls umgekehrt, relativ zu dem Gehäuseteil bewegt werden. Die Lagerung des Schließkörpers beinhaltet typischerweise eine unverlierbare, gleichwohl bedarfsweise aufhebbare bzw. lösbare Anordnung bzw. Verbindung des Schließkörpers an dem bzw. mit dem Gehäuseteil.

In der Offenstellung ist der Schließkörper derart von dem Gehäuseteil weg bewegt, dass die wenigstens eine gehäuseteilseitige Durchgangsöffnung freigegeben ist. Mithin ist in der Offenstellung des Schließkörpers eine Zugangsmöglichkeit in den gehäuseteilseitigen Innenraum gegeben. Entsprechend kann ein Schädling in der Offenstellung des Schließkörpers die Durchgangsöffnung passieren bzw. in den gehäuseteilseitigen Innenraum gelangen.

In der Schließstellung ist der Schließkörper derart gegen das Gehäuseteil bewegt, dass die wenigstens eine Durchgangsöffnung verschlossen ist. Mithin ist in der Schließstellung des Schließkörpers keine Zugangsmöglichkeit in den gehäuseteilseitigen Innenraum gegeben. Entsprechend kann ein Schädling in der Schließstellung des Schließkörpers die Durchgangsöffnung nicht passieren bzw. nicht in den gehäuseteilseitigen Innenraum gelangen.

Für das erfindungsgemäße Prinzip ist es dabei wesentlich, dass in der Schließstellung des Schließkörpers ein, z. B. hochwasser- oder schwallwasserbedingtes, Eindringen von Wasser in das Gehäuseteil, d. h. den gehäuseteilseitigen Innenraum, nicht möglich ist. Der in dem Köderaufnahmebereich aufgenommene Köder ist in der Schließstellung des Schließkörpers zwischen dem Grundkörper und dem Gehäuseteil, typischerweise hermetisch, eingeschlossen. Insbesondere ist der in dem Köderaufnahmebereich aufgenommene Köder in der Schließstellung des Schließkörpers innerhalb des gehäuseteilseitigen Innenraums, d. h. insbesondere innerhalb des unteren Bereichs des gehäuseteilseitigen Innenraums, angeordnet. Derart ist ein Prinzip gegeben, dass der eingangs erwähnten Problematik der Kontamination von Wasser mit in entsprechenden Ködern enthaltenen Substanzen, d. h. Giften bzw. Wirkstoffen, begegnet.

Die Bewegung des Schließkörpers von der Schließstellung in die Offenstellung kann verschiedenartig induziert bzw. realisiert sein. Hierauf wird später näher eingegangen.

Es ist denkbar, dass innerhalb des Gehäuseteils eine Köderplattform angeordnet bzw. ausgebildet ist. Sofern vorhanden, kann die Köderplattform die wenigstens eine Durchgangsöffnung (mit)begrenzen. Es ist denkbar, dass ein zusätzlicher Köder unmittelbar auf der Köderplattform angeordnet ist. Alternativ oder ergänzend kann ein zusätzlicher Köder auch an einer gehäuseteilseitigen Köderhalteeinrichtung zur Halterung eines zusätzlichen Köders gehaltert angeordnet sein. Eine solche Köderhalteeinrichtung ist entsprechend typischerweise oberhalb der Köderplattform angeordnet. Es gilt also, dass wenigstens ein zusätzlicher Köder in dem oberen Bereich des Gehäuseteils angeordnet sein kann.

Um den, wie erwähnt, typischerweise in dem oberen Bereich des Gehäuseteils angeordneten zusätzlichen Köder zu erreichen, muss ein Schädling zunächst in das Gehäuseteil gelangen. Hierfür ist das Gehäuseteil zweckmäßig mit wenigstens einem Durchgang ausgebildet, über welchen der Schädling in das Gehäuseteil und/oder aus dem Gehäuseteil gelangen kann. Ein entsprechender Durchgang kann alternativ oder ergänzend auch an dem Schließkörper ausgebildet sein. Der Durchgang ermöglicht einen Zugang in den unteren Bereich des Gehäuseteils. Um den zusätzlichen Köder zu erreichen, muss der in das Gehäuseteil gelangte Schädling im Weiteren durch die köderplattformseitig begrenzte Durchgangsöffnung auf die Köderplattform und somit in den oberen Bereich des Gehäuseteils gelangen. Nach Anbiss des zusätzlichen Köders kann der Schädling durch Passieren der Durchgangsöffnung von dem oberen Bereich des Gehäuseteils in den unteren Bereich des Gehäuseteils gelangen und die Vorrichtung über entsprechende Durchgänge verlassen. Selbstverständlich ist es prinzipiell auch denkbar, dass der oder ein weiterer Durchgang einen Zugang in den oberen Bereich des Gehäuseteils ermöglicht.

Der Schließkörper kann reversibel zwischen der Offenstellung und der Schließstellung bewegbar gelagert sein. Mithin kann der in der Schließstellung befindliche Schließkörper von alleine zurück in die Offenstellung, und umgekehrt, übergehen. Alternativ kann der Schließkörper irreversibel zwischen der Offenstellung und der Schließstellung bewegbar gelagert sein, derart, dass er in der Schließstellung, insbesondere lösbar, über wenigstens eine Schließkörperhalteeinrichtung halterbar oder gehaltert ist. Über die Schließkörperhalteeinrichtung kann der Schließkörper sonach in der Schließstellung gehaltert werden. Der in der Schließstellung befindliche Schließkörper kann hier also nicht von alleine zurück in die Offenstellung übergehen.

Die Schließkörperhalteeinrichtung kann wenigstens ein gehäuseteilseitiges und/oder schließkörperseitiges mechanisches und/oder magnetisches Haltemittel umfassen, welches zu einer mechanischen und/oder magnetischen Halterung des Schließkörpers in der Schließstellung eingerichtet ist. Die gehäuseteilseitigen bzw. schließkörperseitigen mechanischen bzw. magnetischen Haltemittel können sonach derart zusammenwirken, dass der Schließkörper sicher in der Schließstellung gehaltert und ohne weiteres nicht aus dieser lösbar ist.

Das oder ein mechanisches Haltemittel kann beispielsweise Rast- bzw. Schnappelemente umfassen, welche eine mechanische Halterung des Schließkörpers in der Schließstellung realisieren. Bei den Rast- bzw. Schnappelementen kann es sich z. B. um Vorsprünge und hierzu korrespondierende Ausnehmungen bzw. Hinterschneidungen handeln. Je nach konstruktiver Ausgestaltung der Rast- bzw. Schnappelemente kann die über diese realisierte Halterung lösbar oder unlösbar sein.

Das oder ein magnetisches Haltemittel kann beispielsweise, insbesondere permanentmagnetische, Magnetelemente umfassen, welche aufgrund magnetischer Wechselwirkung eine magnetische Halterung des Schließkörpers in der Schließstellung realisieren. Denkbar ist es in diesem Zusammenhang z. B., dass ein gehäuseteilseitiges Magnetelement derart angeordnet ist, dass es eine den Schließkörper in der Schließstellung halternde magnetische Kraft auf ein schließkörperseitiges Magnetelement ausübt, wenn sich der Schließkörper der Schließstellung annähert bzw. sich in der Schließstellung befindet. Die magnetische Kraft sollte nicht derart hoch sein, dass der in der Offenstellung befindliche Schließkörper allein aufgrund dieser in die Schließstellung bewegt wird. Sofern der Schließkörper aus einem magnetischen oder magnetisierbaren Material gefertigt ist oder ein solches umfasst, kann gegebenenfalls auf schließkörperseitige Magnetelemente verzichtet werden. Grundsätzlich kann das Gehäuseteil und/oder der Schließkörper entsprechende Magnetelemente umfassen.

Die relativ zu dem Gehäuseteil bewegbare Lagerung des Schließkörpers kann konstruktiv durch wenigstens einen gehäuseteilseitigen Führungsabschnitt sowie wenigstens ein schließkörperseitiges Führungselement realisiert sein, wobei der wenigstens eine gehäuseteilseitige Führungsabschnitt und das wenigstens eine schließkörperseitige Führungselement unter Ausbildung einer bewegbar gelagerten Führung des Schließkörpers zwischen der Offenstellung und der Schließstellung, und umgekehrt, zusammenwirken. Im Allgemeinen ist durch das Zusammenwirken des bzw. der gehäuseteilseitigen Führungsabschnitte mit dem bzw. der schließkörperseitigen Führungselemente typischerweise eine Linearführung des Schließkörpers ermöglicht. Ein gehäuseteilseitiger Führungsabschnitt kann an einer Außen- oder Innenseite des Gehäuseteils ausgebildet sein. Ein schließkörperseitiges Führungselement kann z. B. als Führungsschiene oder Führungssteg ausgebildet sein, ein gehäuseteilseitiger Führungsabschnitt kann z. B. als Führungsschienen- bzw. Führungsstegaufnahme ausgebildet sein.

Die konstruktive Ausgestaltung des Schließkörpers betreffend, ist es bevorzugt, dass dieser wenigstens einen, z. B. ebenen oder kalotten- oder kegelförmigen, Schließabschnitt aufweist, welcher in der Schließstellung des Schließkörpers abschnittsweise dichtend an gehäuseteilseitigen Anlageabschnitten anliegt. Durch die dichtende Anlage des Schließkörpers, d. h. entsprechender an dem schließkörperseitigen Schließabschnitt ausgebildeter Gegenanlageabschnitte, an an entsprechenden gehäuseteilseitigen Anlageabschnitten ist ein Eindringen von Wasser, welches sich in dem die Vorrichtung aufnehmenden Kanalschacht befindet, in das Gehäuseteil, d. h. insbesondere in den oberen Bereich des gehäuseteilseitigen Innenraums, nicht möglich.

Zweckmäßig sind die gehäuseteilseitigen Anlageabschnitte wenigstens abschnittsweise mit einem Dichtelement, wie z. B. einem Dichtring, einer Dichtlippe etc., versehen. Gleichermaßen kann der schließkörperseitige Schließabschnitt, d. h. insbesondere entsprechende an diesem ausgebildete Gegenanlageabschnitte, wenigstens abschnittsweise mit einem Dichtelement, wie z. B. einem Dichtring, einer Dichtlippe etc., versehen sein.

Im Weiteren werden beispielhafte Ausführungsformen der Vorrichtung beschrieben, anhand welchen näher erläutert wird, wie eine Bewegung des Schließkörpers von der Offenstellung in die Schließstellung, und umgekehrt, induziert werden kann. Die in diesem Zusammenhang nachfolgend beschriebenen Ausführungsformen können untereinander beliebig kombiniert werden.

Eine Ausführungsform sieht dabei vor, dass der Grundkörper des Schließkörpers als Schwimmkörper ausgebildet ist oder wenigstens einen Schwimmkörper umfasst. Unter einem Schwimmkörper ist ein Körper zu verstehen, welcher auf einer Wasseroberfläche aufschwimmt und nicht untergeht. Dies kann konstruktiv z. B. durch einen wenigstens einen Hohlraum aufweisenden Grundkörper realisiert sein. Der Hohlraum ist beispielsweise mit Luft gefüllt. Alternativ oder ergänzend kann zumindest der Grundkörper des Schließkörpers auch aus einem Material geringer Dichte gefertigt sein, welches sonach aufgrund des Dichteunterschieds auf einer Wasseroberfläche aufschwimmt und nicht untergeht. Ein solches Material kann z. B. Kunststoff, insbesondere geschäumter, Kunststoff sein. Konkret kann es sich dabei also z. B. um geschäumte Thermoplaste, wie z. B. geschäumtes Polyethylen oder geschäumtes Polystyrol (Styropor) handeln. Eine Bewegung des Schließkörpers von der Offenstellung in die Schließstellung wäre hier automatisch durch einen Anstieg des Wasserstands, z. B. in einem die Vorrichtung aufnehmenden Kanalschacht, induziert. Entsprechend wäre eine Bewegung des Schließkörpers von der Schließstellung in die Offenstellung durch einen Abfall des Wasserstands, z. B. in dem die Vorrichtung aufnehmenden Kanalschacht, induziert.

Eine weitere Ausführungsform sieht vor, dass die Bewegung des Schließkörpers von der Offenstellung in die Schließstellung durch eine mit dem Schließkörper koppelbare oder gekoppelte Antriebseinrichtung induziert wird. Die Antriebseinrichtung ist dazu eingerichtet, den Schließkörper von der Offenstellung in die Schließstellung, und/oder umgekehrt, zu bewegen. Hinsichtlich der Ausbildung bzw. Konzipierung einer solchen Antriebseinrichtung sind zwei prinzipiell unterschiedliche, jedoch wiederum miteinander kombinierbare Ausführungsformen vorstellbar.

Eine erste Ausführungsform einer Antriebseinrichtung sieht vor, dass die Antriebseinrichtung als motorische Antriebseinrichtung ausgebildet ist oder wenigstens eine solche umfasst. Mithin kann wenigstens eine mit dem Schließkörper gekoppelte motorische Antriebseinrichtung vorgesehen sein, welche dazu eingerichtet ist, den Schließkörper von der Offenstellung in die Schließstellung, und/oder umgekehrt, zu bewegen. Bei der motorischen Antriebseinrichtung kann es sich z. B. um einen Elektromotor handeln. Die Kopplung zwischen der motorischen Antriebseinrichtung und dem Schließkörper kann z. B. durch geeignete Zugmittel, etwa in Form von Bändern, Ketten Stege etc., realisiert sein. Selbstverständlich kann der Grundkörper des Schließkörpers auch in dieser Ausführungsform als Schwimmkörper ausgebildet sein oder wenigstens einen Schwimmkörper umfassen.

Eine zweite Ausführungsform einer Antriebseinrichtung sieht vor, dass die Antriebseinrichtung als magnetische Antriebseinrichtung ausgebildet ist oder wenigstens eine solche umfasst. Mithin kann wenigstens eine mit dem Schließkörper koppelbare oder gekoppelte magnetische Antriebseinrichtung vorgesehen sein, welche dazu eingerichtet ist, den Schließkörper von der Offenstellung in die Schließstellung, und/oder umgekehrt, zu bewegen. Auch in dieser Ausführungsform kann der Schließkörper als Schwimmkörper ausgebildet sein oder wenigstens einen Schwimmkörper umfassen.

Die magnetische Antriebseinrichtung umfasst typischerweise wenigstens ein magnetisierbares und/oder magnetisches Magnetelement seitens des Gehäuseteils und seitens des Schließkörpers. Es kommen also sowohl elektromagnetische als auch permanentmagnetische Magnetelemente in Betracht. Bei einem magnetisierbaren Magnetelement kann es sich sonach z. B. um einen Elektromagneten, welcher bei Bestromung eine magnetische Anziehungskraft ausübt, handeln. Bei einem magnetischen Magnetelement kann es sich z. B. um einen Permanentmagneten, welcher ein statisches Magnetfeld aufweist, handeln. In jedem Fall können die gehäuseteilseitigen und die schließkörperseitigen Magnetelemente miteinander wechselwirken derart, dass eine hohe magnetische Anziehungskraft ausübbar ist, aufgrund welcher der Schließkörper von der Schließstellung in die Offenstellung bewegt werden kann.

In diesem Zusammenhang sind unterschiedliche Konfigurationen denkbar. Es ist dabei z. B. möglich, dass gehäuseteilseitig wenigstens ein elektromagnetisches Magnetelement angeordnet ist, welches bedarfsweise bestromt werden kann, und bei Bestromung derart mit wenigstens einem schließkörperseitigen permanentmagnetischen Magnetelement wechselwirkt, dass der Schließkörper aufgrund magnetischer Anziehung von der Offenstellung in die Schließstellung bewegt werden kann. Das oder ein schließkörperseitige(s) Magnetelement kann dabei auf einer freiliegenden Oberfläche des Schließkörpers angeordnet oder in den Schließkörper integriert sein. Selbstverständlich kann der Schließkörper als solcher auch aus einem magnetischen oder magnetisierbaren Material, wie z. B. ferritischem Stahl, oder mit magnetischen oder magnetisierbaren Partikeln gefüllten Kunststoff, gefertigt sein.

Prinzipiell ist es jedoch auch möglich, schließkörperseitig wenigstens ein elektromagnetisches Magnetelement und gehäuseteilseitig wenigstens ein permanentmagnetisches Magnetelement vorzusehen.

Gleichermaßen können sowohl gehäuseteilseitig als auch schließkörperseitig entsprechende elektromagnetische Magnetelemente vorgesehen sein.

Denkbar ist es auch, sowohl gehäuseteilseitig als auch schließkörperseitig wenigstens ein permanentmagnetisches Magnetelement vorzusehen, so dass bei hinreichender Annäherung des schließkörperseitigen Magnetelements an das gehäuseteilseitige Magnetelement der Schließkörper aufgrund magnetischer Anziehung von der Offenstellung in die Schließstellung bewegt wird. Die hinreichende Annäherung kann z. B. dann erreicht sein, wenn ein einen als Schwimmkörper ausgebildeten oder wenigstens einen Schwimmkörper umfassenden Grundkörper aufweisender Schließkörper, z. B. hochwasserbedingt, ausgehend von der Offenstellung um ein gewisses Maß in Richtung der Köderplattform, d. h. in eine zwischen der Offenstellung und der Schließstellung liegende Stellung, bewegt ist. Selbstverständlich ist in dieser Ausführungsform darauf zu achten, dass die zwischen den jeweiligen permanentmagnetischen Magnetelementen bestehende magnetische Anziehung bzw. Wechselwirkung nicht derart hoch ist, dass der in der Offenstellung befindliche Schließkörper allein aufgrund dieser in die Schließstellung bewegt wird.

Bezogen auf die beschriebenen Ausführungsformen einer motorischen und/oder einer elektromagnetischen Antriebseinrichtung ist es denkbar, dass eine zugeordnete Steuereinrichtung vorgesehen ist, über welche die Steuerung des Betriebs der Antriebseinrichtung(en) erfolgt. Die Steuereinrichtung ist sonach zur Erzeugung von den Betrieb der motorischen und/oder elektromagnetischen Antriebseinrichtung(en) steuernden Steuerinformationen eingerichtet.

Die Steuereinrichtung kann im Weiteren dazu eingerichtet sein, die Steuerinformationen in Abhängigkeit einer von einer Wasserstandserfassungseinrichtung zur Erfassung des Wasserstands in der die Vorrichtung aufnehmenden Umgebung, z. B. einem Kanalschacht, gelieferten, den oder einen Wasserstand in der die Vorrichtung aufnehmenden Umgebung beschreibenden Wasserstandsinformation zu erzeugen. Mithin kann eine Steuerung des Betriebs der motorischen und/oder elektromagnetischen Antriebseinrichtung in Abhängigkeit des über eine entsprechende Wasserstandserfassungseinrichtung erfassten und in einer entsprechenden Wasserstandsinformation abgebildeten Wasserstands in der die Vorrichtung aufnehmenden Umgebung erfolgen. Seitens der Steuereinrichtung können dabei bestimmte kritische Wasserstände berücksichtigt werden, bei deren Erreichen ein Eindringen von Wasser in das Gehäuseteil, d. h. insbesondere in den oberen Bereich des Gehäuseteils bzw. den gehäuseteilseitigen Innenraum, prinzipiell möglich ist, so dass die Steuereinrichtung rechtzeitig entsprechende Steuerinformationen an die motorische und/oder elektromagnetische Antriebseinrichtung liefert, um ein Eindringen von Wasser in das Gehäuseteil bzw. den gehäuseteilseitigen Innenraum zu verhindern.

Die Wasserstandserfassungseinrichtung kann einen Teil der Vorrichtung bilden. Dies ist jedoch nicht zwingend erforderlich, vielmehr kann die Steuereinrichtung auch dazu eingerichtet sein, mit wenigstens einer externen, d. h. zu der Vorrichtung räumlich getrennt angeordneten, Wasserstandserfassungseinrichtung zu kommunizieren. Hierbei kann es sich insbesondere um eine bezüglich der Position der Vorrichtung räumlich getrennt angeordnete, d. h. z. B. in einem Kanalschacht stromaufwärts befindliche, Wasserstandserfassungseinrichtung handeln, so dass ein bevorstehender hoher Wasserstand rechtzeitig erfasst werden kann. Selbstverständlich weist die Vorrichtung respektive die Steuereinrichtung hierfür geeignete Empfangseinrichtungen auf, welche einen, insbesondere funkbasierten, d. h. z. B. per Bluetooth, WLAN etc. realisierten, Daten- bzw. Informationsaustausch mit einer Wasserstandserfassungseinrichtung ermöglichen.

Die Vorrichtung kann ferner eine Schließstellungserfassungseinrichtung zur Erfassung der Schließstellung des Schließkörpers umfassen. Die typischerweise in dem Gehäuseteil angeordnete Schließstellungserfassungseinrichtung ist dazu eingerichtet, bei Erfassung der Schließstellung des Schließkörpers wenigstens eine akustische und/oder optische Schließstellungsinformation zu erzeugen und über wenigstens ein Ausgabemittel auszugeben. Derart ist es ermöglicht, das Erreichen der Schließstellung zu erfassen und über akustische und/oder optische Signale auf einfache Weise anzuzeigen, was im Falle von Service- oder Reparaturarbeiten zweckmäßig sein kann. Dem Service- oder Reparaturpersonal kann sonach angezeigt werden, dass, z. B. in einem Kanal, ein hoher Wasserstand erreicht ist oder wurde, aufgrund dessen der Schließkörper in die Schließstellung bewegt wurde oder weiterhin in der Schließstellung gehaltert ist. Die Schließstellungserfassungseinrichtung umfasst demzufolge eine geeignete Sensorik zur Erfassung der Schließstellung des Schließkörpers. Die Sensorik kann beispielsweise optisch, d. h. z. B. über die Implementierung von Lichtschranken, ausgeführt sein.

Die Vorrichtung kann ferner eine Anbisserfassungseinrichtung zur Erfassung eines Köderanbisses umfassen. Die typischerweise in dem Gehäuseteil angeordnete Anbisserfassungseinrichtung ist dazu eingerichtet, bei Erfassung eines Anbisses eines Köders wenigstens eine akustische und/oder optische Anbissinformation zu erzeugen und über wenigstens ein Ausgabemittel auszugeben. Derart ist es ermöglicht, einen Köderanbiss zu erfassen und über akustische und/oder optische Signale auf einfache Weise anzuzeigen, was wiederum im Falle von Service- oder Reparaturarbeiten zweckmäßig sein kann. Dem Service- oder Reparaturpersonal kann sonach angezeigt werden, dass ein Köderanbiss erfolgte und somit eine Überprüfung dahin, ob es erforderlich ist, einen neuen Köder vorzusehen. Die Anbisserfassungseinrichtung umfasst demzufolge eine geeignete Sensorik zur Erfassung eines Köderanbisses. Die Sensorik kann beispielsweise das Gewicht des in dem Köderaufnahmebereich aufgenommenen Köders erfassen, wobei anbissbedingte Gewichtsänderungen, typischerweise Gewichtsreduzierungen, des Köders Rückschlüsse auf einen Köderanbiss zulassen. Gleichermaßen kann die Sensorik anbissbedingte, auf den Köder und/oder die den Schließkörper wirkende Kräfte, typischerweise Zugkräfte, erfassen, welche ebenso Rückschlüsse auf einen Köderanbiss zulassen.

Wie erwähnt, kann ein zusätzlicher Köder an einer Köderhalteeinrichtung zur Halterung eines Köders anordenbar oder angeordnet sein. Für den Fall, dass die Vorrichtung mit einer solchen Köderhalteeinrichtung ausgestattet ist, kann es ebenso zweckmäßig sein, wenn die Vorrichtung ferner eine weitere Anbisserfassungseinrichtung zur Erfassung eines Anbisses des zusätzlichen Köders umfasst. Die typischerweise in dem Gehäuseteil angeordnete weitere Anbisserfassungseinrichtung ist entsprechend dazu eingerichtet, bei Erfassung eines Anbisses eines zusätzlichen Köders wenigstens eine akustische und/oder optische Anbissinformation zu erzeugen und über wenigstens ein Ausgabemittel auszugeben. Derart ist es ermöglicht, einen Anbiss eines zusätzlichen Köders durch einen Schädling zu erfassen und über akustische und/oder optische Signale auf einfache Weise anzuzeigen, was wiederum im Falle von Service- oder Reparaturarbeiten zweckmäßig sein kann. Dem Service- oder Reparaturpersonal kann sonach angezeigt werden, dass ein Anbiss eines zusätzlichen Köders erfolgte und somit eine Überprüfung dahin, ob es erforderlich ist, einen neuen zusätzlichen vorzusehen. Die weitere Anbisserfassungseinrichtung umfasst demzufolge eine geeignete Sensorik zur Erfassung eines Anbisses eines zusätzlichen Köders. Die Sensorik kann beispielsweise das Gewicht des an der Köderhalteeinrichtung angeordneten zusätzlichen Köders erfassen, wobei anbissbedingte Gewichtsänderungen, typischerweise Gewichtsreduzierungen, des zusätzlichen Köders Rückschlüsse auf einen Anbiss des zusätzlichen Köders zulassen. Gleichermaßen kann die Sensorik anbissbedingte, auf den zusätzlichen Köder und/oder die Köderhalteeinrichtung wirkende Kräfte, typischerweise Zugkräfte, erfassen, welche ebenso Rückschlüsse auf einen Anbiss des zusätzlichen Köders zulassen.

Eine Anbisserfassungseinrichtung kann in Abhängigkeit der Anbissinformation, z. B. basierend auf der Erfassung des Gewichts des Köders bzw. zusätzlichen Köders, unterschiedliche akustische und/oder optische Signale erzeugen. Das Gewicht eines neuen, nicht angebissenen Köders kann z. B. mit optischen Signalen grüner Farbe und/oder mit dauerhaft konstant ausgegebenen optischen Signalen signalisiert werden, das Gewicht eines teilangebissenen Köders kann z. B. mit optischen Signalen gelber Farbe und/oder mit einer ersten Blinkfrequenz ausgegebenen optischen Signalen signalisiert werden, ist der Köder vollständig aufgefressen kann dies z. B. durch optische Signale roter Farbe und/oder mit einer im Vergleich zu der ersten Blinkfrequenz höheren zweiten Blinkfrequenz ausgegebenen optischen Signalen signalisiert werden.

Gleiches gilt selbstverständlich für die Ausgabe akustischer Signale, wobei insbesondere die Frequenz und/oder der Rhythmus eines Tons bzw. einer Tonfolge in Abhängigkeit der Anbissinformation, z. B. basierend auf der Erfassung des Gewichts des Köders, variierbar sind. Analoges gilt selbstverständlich für den Fall, dass die Anbisserfassungseinrichtung nicht über das Gewicht, sondern über andere Messgrößen, Rückschlüsse auf einen Köderanbiss zieht.

Ein akustisches Ausgabemittel kann z. B. als Lautsprecher ausgebildet sein oder wenigstens einen solchen umfassen. Ein optisches Ausgabemittel kann z. B. als, insbesondere mehrfarbige, Leuchtdiode oder Bildschirm ausgebildet sein oder wenigstens eine(n) solche(n) umfassen.

Das oder ein Ausgabemittel kann an oder in dem Gehäuseteil angeordnet sein, wobei es an einer freiliegenden Außenfläche des Gehäuseteils oder innerhalb des gehäuseteilseitigen Innenraums angeordnet ist. Insbesondere für optische Ausgabemittel gilt, dass, sofern diese innerhalb des Gehäuseteils, d. h. innerhalb eines gehäuseteilseitigen Innenraums angeordnet sind, das Gehäuseteil zumindest teilweise teiltransparent ausgebildet sein sollte, um die optischen Signale auch von außerhalb des Gehäuseteils erkennbar zu machen.

Das oder ein Ausgabemittel kann auch in ein externes mobiles Endgerät integriert sein. Sofern das oder ein Ausgabemittel in ein externes mobiles Endgerät integriert ist, kann die Schließstellungserfassungseinrichtung und/oder die Anbisserfassungseinrichtung dazu eingerichtet sein, mit dem externen mobilen Endgerät zu kommunizieren und die Schließstellungsinformation und/oder die Anbissinformation an das externe mobile Endgerät zur Ausgabe an dem dortigen Ausgabemittel zu übertragen. Service- oder Bedienpersonal kann derart, z. B. auch ohne eine Kanalisation zu betreten, über das Erreichen der Schließstellung des Schließkörpers und/oder einen Köderanbiss informiert werden. Die beschriebene Kommunikation ist insbesondere funkbasiert, d. h. z. B. per Bluetooth, WLAN etc. realisiert, weshalb die Schließstellungserfassungseinrichtung und/oder die Anbisserfassungseinrichtung entsprechende funkbasierte Sendeeinrichtungen umfassen. Bei einem externen mobilen Endgerät kann es sich z. B. um ein Handy, Smartphone, Tablet, ein Notebook etc. handeln.

In Anbetracht der Vielzahl an gegebenenfalls in dem Gehäuseteil anzuordnenden elektrischen und/oder elektronischen Komponenten, d. h. insbesondere entsprechender Steuerungs- oder Erfassungseinrichtungen, kann es zweckmäßig sein, dass in dem gehäuseteilseitigen Innenraum wenigstens eine Aufnahmekammer ausgebildet oder angeordnet ist, in welcher elektrische und/oder elektronische Komponenten der Vorrichtung, insbesondere Steuereinrichtungen und Erfassungseinrichtungen, anordenbar oder angeordnet sind. Die Aufnahmekammer bietet sonach einen Schutz dieser Komponenten gegenüber äußeren, d. h. insbesondere klimatischen und mechanischen, Einflüssen. Die Aufnahmekammer kann integral mit dem Gehäuseteil oder als separates Bauteil ausgeführt sein, welches gesondert in den gehäuseteilseitigen Innenraum einzusetzen ist. Die Aufnahmekammer kann ein über ein Deckelelement verschließbar oder verschlossen sein, wobei es sich hierbei auch um das weiter oben erwähnte gehäuseteilseitige Deckelement handeln kann, so dass über ein Entfernen des Deckelelements eine Zugangsmöglichkeit in die Aufnahmekammer geschaffen werden kann.

Die oder eine Aufnahmekammer, in welcher entsprechende elektrische und/oder elektronische Komponenten der Vorrichtung, insbesondere Steuereinrichtungen und Erfassungseinrichtungen, anordenbar oder angeordnet sind, kann einen, insbesondere zylinderartigen bzw. zylinderförmigen, ein Aufnahmekammervolumen zur Aufnahme elektrischer und/oder elektronischer Komponenten der Vorrichtung begrenzenden Aufnahmekammergrundkörper aufweisen, welcher zumindest abschnittsweise in einen gehäuseteilseitigen Aufnahmeraum ragt.

Die Aufnahmekammer ist zweckmäßig lösbar an dem Gehäuseteil befestigbar oder befestigt. Die Aufnahmekammer kann sonach an oder in dem Gehäuseteil angeordnet und von diesem entfernt werden. Selbstverständlich ragt der Aufnahmekammergrundkörper nur in dem an dem Gehäuseteil befestigten Zustand der Aufnahmekammer in den gehäuseteilseitigen Aufnahmeraum. Die lösbare Befestigung der Aufnahmekammer an dem Gehäuseteil kann durch, insbesondere formschlüssiges, Zusammenwirken wenigstens eines gehäuseteilseitigen Befestigungsabschnitts mit wenigstens einem aufnahmekammergrundkörperseitigen Befestigungsabschnitt ausbildbar oder ausgebildet sein. Die Aufnahmekammer und das Gehäuseteil sind hier also jeweils mit wenigstens einem Befestigungsabschnitt ausgestattet, über deren Zusammenwirken sich eine stabile bzw. unverlierbare, gleichwohl lösbare Befestigung der Aufnahmekammer an dem Gehäuseteil realisieren lässt. Unter einem, insbesondere formschlüssigen, Zusammenwirken jeweiliger Befestigungsabschnitte ist insbesondere ein zumindest abschnittsweises Ineinander- oder Übereinandergreifen entsprechender Befestigungsabschnitte zu verstehen.

Die Aufnahmekammer kann dabei zwischen einer Befestigungsstellung und einer Lösestellung drehbar gelagert an dem Gehäuseteil anordenbar oder angeordnet sein. In der Befestigungsstellung wirken der wenigstens eine gehäuseteilseitige Befestigungsabschnitt und der wenigstens eine aufnahmekammergrundkörperseitige Befestigungsabschnitt, insbesondere formschlüssig, zusammen, so dass die Aufnahmekammer lösbar an dem Gehäuseteil befestigt ist. In der Lösestellung wirken der wenigstens eine gehäuseteilseitige Befestigungsabschnitt und der wenigstens eine aufnahmekammergrundkörperseitige Befestigungsabschnitt nicht zusammen, so dass die Aufnahmekammer von dem Gehäuseteil lösbar ist. Die Befestigung der Aufnahmekammer an dem Gehäuseteil kann sonach durch Drehbewegungen der Aufnahmekammer um eine Drehachse, welche typischerweise mit der Zentralachse der Aufnahmekammer zusammenfällt, relativ zu dem Gehäuseteil hergestellt und wieder aufgehoben werden. Die Aufnahmekammer kann also durch Drehbewegungen relativ zu dem Gehäuseteil von der Befestigungsstellung in die Lösestellung, und umgekehrt, überführt werden.

Der oder wenigstens ein gehäuseteilseitiger Befestigungsabschnitt kann z. B. als ein von einem zylinderartigen Abschnitt des Gehäuseteils radial abragendes Ringscheibenelement oder Ringsegmentscheibenelement mit wenigstens einem von diesem axial abragenden schulterartigen Befestigungsvorsprung ausgebildet sein. Der oder wenigstens ein aufnahmekammergrundkörperseitiger Befestigungsabschnitt kann als ein von einem zylinderartigen Ansatz des Aufnahmekammergrundkörpers radial abragendes Ringscheibenelement oder Ringsegmentscheibenelement mit einem zu dem an dem gehäuseteilseitigen Befestigungsabschnitt gebildeten Befestigungsvorsprung korrespondierenden, d. h. insbesondere gegengleich ausgebildeten bzw. ausgerichteten, axial abragenden schulterartigen Befestigungsvorsprung ausgebildet sein.

Zur Realisierung entsprechender Drehbewegungen der Aufnahmekammer weist die Aufnahmekammer im Bereich eines oberen freiliegenden Deckabschnitts wenigstens einen Werkzeugangriffsbereich zum formschlüssigen Eingreifen eines Werkzeugs, über welches Werkzeug sich Drehbewegungen auf die Aufnahmekammer übertragen lassen, um die Aufnahmekammer von der Befestigungsstellung in die Lösestellung, und umgekehrt, zu überführen, auf. Durch die Anordnung bzw. Ausbildung wenigstens eines entsprechenden Werkzeugangriffsbereichs im Bereich eines oberen freiliegenden Deckabschnitts der Aufnahmekammer ist der Werkzeugangriffsbereich stets (von oben) zugänglich. Die geometrische Gestalt des Werkzeugangriffsbereichs ist derart, dass ein, z. B. T-Förmiges, Werkzeug formschlüssig an diesem angreifen kann, so dass Drehbewegungen auf die Aufnahmekammer übertragen werden können.

Der Werkzeugangriffsbereich ist insbesondere auch im ordnungsgemäß angeordneten, d. h. z. B. in einen Kanalschacht eingesetzten, Zustand der Vorrichtung gut, d. h. insbesondere von oben, zugänglich. Durch geeignete Formgebung und Dimensionierung eines entsprechenden Werkzeugs ist es - bezogen auf das Beispiel einer in einem Kanalschacht angeordneten Vorrichtung - nicht zwingend notwendig, dass ein Benutzer in den Kanalschacht hinabsteigt, um die Aufnahmekammer durch entsprechende Drehbewegungen von der Befestigungsstellung in die Lösestellung, oder umgekehrt, zu überführen. Die Aufnahmekammer kann sonach von außerhalb des Kanalschachts von dem Gehäuseteil gelöst und gegebenenfalls aus dem Kanalschacht entnommen werden. Dies kann beispielsweise zu Kontrollzwecken, z. B. dahin, ob ein Köderanbiss erfolgt ist, praktikabel sein, so dass Kontrollen erheblich vereinfacht und erheblich zügiger durchgeführt werden können. Insbesondere, wenn der oder ein Köder über eine an der Aufnahmekammer angeordnete oder ausgebildete optionale Köderhalteeinrichtung zur Halterung eines zusätzlichen Köders gehaltert ist, kann die Aufnahmekammer samt Köderhalteeinrichtung und daran gehaltertem Köder ohne Einstieg in den Kanalschacht aus dem Kanalschacht entnommen, ein etwaiger Köderanbiss erkannt, gegebenenfalls ein Austausch oder Ersatz des oder eines Köders vorgenommen, und die Aufnahmekammer samt Köderhalteinrichtung sowie daran gehaltertem Köder wieder in den Kanalschacht eingebracht werden.

Aus vorstehendem Absatz ergibt sich, dass die oder allgemein eine Köderhalteeinrichtung zur Halterung eines zusätzlichen Köders zweckmäßig an der Aufnahmekammer angeordnet oder ausgebildet ist. Die Köderhalteeinrichtung ist dabei insbesondere an einem in den gehäuseteilseitigen Aufnahmeraum ragenden Abschnitt der Aufnahmekammer angeordnet oder ausgebildet.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1 - 6: jeweils eine Prinzipdarstellung einer Vorrichtung zur Halterung eines Kö-ders gemäß einem Ausführungsbeispiel der Erfindung; und
- Fig. 7 - 10: jeweils eine Prinzipdarstellung einer Vorrichtung zur Halterung eines Köders gemäß einem weiteren Ausführungsbeispiel der Erfindung.

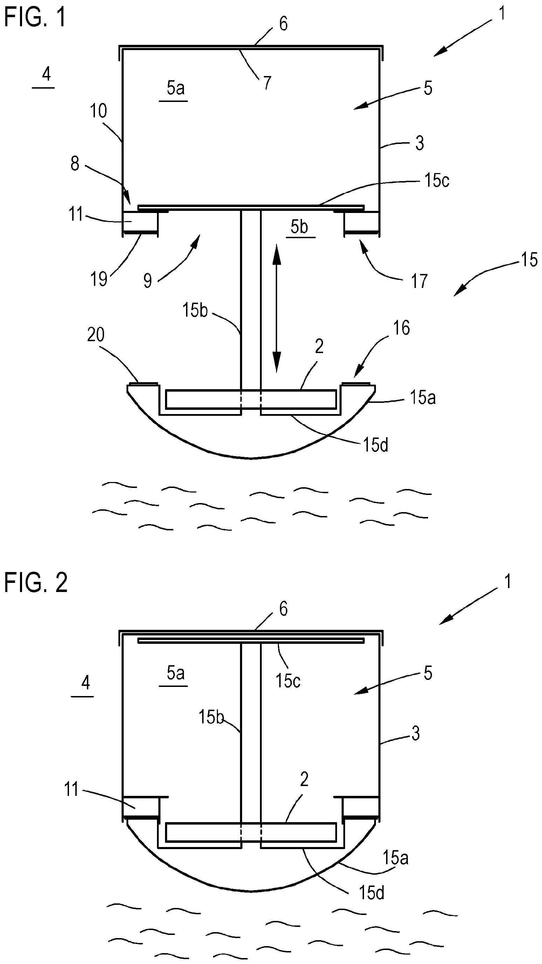

Fig. 1 zeigt eine Prinzipdarstellung einer Vorrichtung 1 zur Halterung eines Köders 2 gemäß einem Ausführungsbeispiel der Erfindung. Der Köder 2 enthält Substanzen, d. h. insbesondere Gifte und Wirkstoffe, die ein Ableben von Schädlingen, wie insbesondere Ratten, herbeiführen und/oder ein Vermehren von Schädlingen verhindern. Offensichtlich zeigt Fig. 1 eine Schnittansicht der Vorrichtung 1.

Die Vorrichtung 1 umfasst ein Gehäuseteil 3. Das Gehäuseteil 3 ist aus einem korrosionsstabilen Material, wie z. B. einem Stahlblech, und (im Wesentlichen) als hohlzylindrischer Körper ausgebildet, d. h. das Gehäuseteil 3 begrenzt einen (im Wesentlichen) zylindrischen Innenraum 5.

Das Gehäuseteil 3 ist in eine Kanalisation 4, d. h. z. B. einen Abwasserkanal- bzw. Abwasserkanalschacht, kurz Kanalschacht, eingesetzt. Die Befestigung des Gehäuseteils 3 erfolgt über nicht näher gezeigte gehäuseteilseitige Befestigungsmittel, über welche das Gehäuseteil 3, insbesondere lösbar, an einer Wandung der Kanalisation 4 befestigt ist. Die Befestigungsmittel können hakenförmig ausgebildet sein, so dass das Gehäuseteil 3 in der Wandung der Kanalisation 4 oder entsprechenden kanalisationsseitigen Steigeinrichtungen (nicht gezeigt), wie z. B. Steigeisen, verhakt werden kann.

Im Bereich einer oberen Stirnseite des Gehäuseteils 3 ist ein optionales Deckelelement 6 vorgesehen. Das Gehäuseteil 3 ist sonach stirnseitig über ein Deckelelement 6 verschließbar. Über ein Entfernen des Deckelelements 6 kann eine obere Zugangsmöglichkeit in einen gehäuseteilseitigen Innenraum 5 geschaffen werden. Das Deckelelement 6 weist einen Gewindeabschnitt (nicht gezeigt), das Gehäuseteil 3 weist einen hierzu gegengleichen Gewindeabschnitt (ebenso nicht gezeigt) auf, so dass das Deckelelement 6 mit dem Gehäuseteil 3 verschraubt werden kann. Zwischen dem Deckelelement 6 und dem Gehäuseteil 3 ist ferner ein optionales Dichtelement 7 angeordnet, welches eine Abdichtung des Gehäuseteils 3 im Bereich der oberen Stirnseite ermöglicht. Wie erwähnt, ist das Deckelelement 6 rein optional. Sofern kein Deckelelement 6 vorhanden ist, kann die obere Stirnseite des Gehäuseteils 3 durch ein entsprechend stirnseitiges gehäuseteilseitiges Wandungselement verschlossen sein.

Das Gehäuseteil 3 weist im Bereich einer der oberen Stirnseite gegenüber liegenden unteren Stirnseite eine, typischerweise kreisrunde, axiale Durchgangsöffnung 9 auf. Die Durchgangsöffnung 9 stellt eine Zugangsmöglichkeit in den gehäuseteilseitigen Innenraum 5 her. Die Durchgangsöffnung 9 definiert sonach einen oberhalb dieser befindlichen oberen Bereich 5a des Innenraums 5 und einen unterhalb dieser befindlichen unteren Bereich 5b des Innenraums 5.

Die Durchgangsöffnung 9 ist durch bezüglich der Symmetrieachse des Gehäuseteils 3 radial nach innen verlaufende Wandungselemente 11, d. h. insbesondere durch deren freie Enden begrenzt. Die Wandungselemente 11 ragen bezüglich der Symmetrieachse des Gehäuseteils 3 radial nach innen von der Außenwand 10 des Gehäuseteils 3 ab. Die der oberen Stirnseite des Gehäuseteils 3 zugewandten Bereiche der Wandungselemente 11 bilden eine ringförmige Plattform 8.

Die Vorrichtung 1 umfasst ferner einen Schließkörper 15. Der Schließkörper 15 ist ein rotationssymmetrisches Bauteil und umfasst als diesem zugehörige Bauelemente bzw. Bauelementabschnitte einen Grundkörper 15a, einen bezüglich der Symmetrieachse des Grundkörpers 15a axial abragenden Verbindungssteg 15b und einen an dem freien Ende des Verbindungsstegs 15b angeordneten, sich bezüglich der Symmetrieachse des Grundkörpers 15a radial erstreckenden, plattenförmigen Lagerungsabschnitt 15c. Der Lagerungsabschnitt 15c ist sonach über den Verbindungssteg 15b mit dem Grundkörper 15a verbunden. Diese Verbindung kann lösbar sein, d. h. sowohl der Grundkörper 15a als auch der Lagerungsabschnitt 15c können, z. B. durch Klemm-, Rast- oder Steckverbindungen, mit dem Verbindungssteg 15b lösbar verbunden sein. Selbstverständlich ist es auch denkbar, dass der Schließkörper 15 einstückig bzw. monolithisch ausgebildet ist.

Ersichtlich ist in dem Grundkörper 15a ein durch eine abschnittsweise ringförmige Vertiefung gebildeter Köderaufnahmebereich 15d gebildet. Der Köderaufnahmebereich 15d ist in seinen Abmessungen an die Abmessungen des hier ebenso ringförmigen Köders 2 angepasst, so dass Letzterer stabil in dem Köderaufnahmebereich 15d aufgenommen ist.

Die Verbindung des Schließkörpers 15 mit dem Gehäuseteil 3 erfolgt dadurch, dass die freien Enden des Lagerungsabschnitts 15c derart in den gehäuseteilseitigen Innenraum 5 eingesetzt sind, dass diese die gehäuseteilseitigen Wandungselemente 11 oberseitig übergreifen und sonach in der Offenstellung des Schließkörpers 15 auf diesen aufliegen. Hieraus ergibt sich eine unverlierbare, jedoch, wie sich im Weiteren ergibt, lösbare Anordnung bzw. Verbindung des Schließkörpers 15 an dem bzw. mit dem Gehäuseteil 3.

Ersichtlich ist der schließkörperseitige Lagerungsabschnitt 15c in seinen (radialen) Abmessungen derart bemessen, dass dieser durch Kippbewegungen des Schließkörpers 15 relativ zu dem Gehäuseteil 3 durch die gehäuseteilseitige Durchgangsöffnung 9 bewegbar ist. Der Außendurchmesser bzw. die radialen Abmessungen des Lagerungsabschnitts 15c sind also geringer als der Innendurchmesser des Gehäuseteils 3. Um den Lagerungsabschnitt 15c durch die gehäuseteilseitige Durchgangsöffnung 9 zu bewegen, muss der Lagerungsabschnitt 15c zunächst um ein gewisses Maß weiter in den gehäuseteilseitigen Innenraum 5 angehoben bzw. bewegt und sodann relativ zu dem Gehäuseteil 3 verkippt werden. Derart kann die Verbindung zwischen dem Gehäuseteil 3 und dem Schließkörper 15 bedarfsweise aufgehoben bzw. bei umgekehrter Abfolge (wieder) hergestellt werden.

Aus vorstehenden Ausführungen ergibt sich, dass der Schließkörper 15 relativ zu dem Gehäuseteil 3 bewegbar gelagert ist. Im Rahmen der bewegbaren Lagerung des Schließkörpers 15 sind eine Offenstellung und eine Schließstellung vorgesehen. Der Schließkörper 15 ist also insbesondere zwischen einer Offenstellung und einer Schließstellung bewegbar gelagert und kann zwischen einer Offenstellung und einer Schließstellung, sowie gegebenenfalls umgekehrt, relativ zu dem Gehäuseteil 3 bewegt werden.

In der in Fig. 1 gezeigten Offenstellung ist der Grundkörper 15a des Schließkörpers 15 derart von dem Gehäuseteil 3 weg bewegt, dass die Durchgangsöffnung 9 freigegeben ist. In der in Fig. 2 gezeigten Schließstellung ist der Grundkörper 15a des Schließkörpers 15 derart gegen das Gehäuseteil 3, d. h. die der unteren Stirnseite des Gehäuseteils 3 zugewandten unteren Abschnitte der gehäuseteilseitigen Wandungselemente 11, bewegt, dass die Durchgangsöffnung 9 verschlossen ist. Der in dem Köderaufnahmebereich 15d aufgenommene Köder 2 ist in der Schließstellung des Schließkörpers 15 sonach zwischen dem Grundkörper 15a und dem Gehäuseteil 3 eingeschlossen. Insbesondere ist der in dem Köderaufnahmebereich 15d aufgenommene Köder 2 in der Schließstellung des Schließkörpers 15 innerhalb des gehäuseteilseitigen Innenraums 5, d. h. insbesondere innerhalb des unteren Bereichs 5b des gehäuseteilseitigen Innenraums 5, angeordnet.

In der Schließstellung des Schließkörpers 15 ist eine dichtende Anlage schließkörperseitiger Schließabschnitte 16 an entsprechenden unteren Abschnitten der gehäuseteilseitigen Wandungselemente 11 , welche als gehäuseteilseitige Anlageabschnitte 17 zu erachten sind, gegeben. Die dichtende Anlage ergibt sich daraus, dass die gehäuseteilseitigen Anlageabschnitte 17 mit einem Dichtelement 19 versehen sind. Optional kann ein Dichtelement 20 auch an den schließkörperseitigen Schließabschnitten 16 vorhanden sein.

Der in der Schließstellung des Schließkörpers 15 realisierte Verschluss der Durchgangsöffnung 9 verhindert insbesondere ein, z. B. bei Hoch- oder Schwallwasser mögliches, unerwünschtes Eindringen von Wasser in den oberen Bereich 5a des gehäuseteilseitigen Innenraums 5. Da der in dem Köderaufnahmebereich 15d aufgenommene Köder 2 in der Schließstellung des Schließkörpers 15, wie erwähnt, zwischen dem Grundkörper 15a des Schließkörpers 15 und dem Gehäuseteil 3 eingeschlossen ist, ist die Gefahr einer Kontamination des in dem Kanalschacht befindlichen Wassers mit den in dem Köder 2 enthaltenen Substanzen beseitigt.

Die Bewegung des Schließkörpers 15 von der Offenstellung in die Schließstellung erfolgt in dem in den Fig. 1, 2 gezeigten Ausführungsbeispiel durch einen Anstieg des Wasserstands in dem Kanalschacht. Dies hängt damit zusammen, dass der Grundkörper 15a des Schließkörpers 15 als Schwimmkörper ausgebildet ist. Der Grundkörper 15a des Schließkörpers 15 weist also z. B. einen mit Luft gefüllten Hohlraum (nicht gezeigt) auf. Alternativ oder ergänzend kann der Grundkörper 15a des Schließkörpers 15 aus einem, insbesondere geschäumten, Kunststoffmaterial geringer Dichte gefertigt sein, welches aufgrund des Dichteunterschieds auf einer Wasseroberfläche aufschwimmt und nicht untergeht. Eine Bewegung des Schließkörpers 15 von der Offenstellung in die Schließstellung ist sonach automatisch durch einen Anstieg des Wasserstands in dem Kanalschacht induziert. Entsprechend ist eine Bewegung des Schließkörpers 15 von der Schließstellung in die Offenstellung durch einen Abfall des Wasserstands in dem Kanalschacht induziert.

Der Schließkörper 15 kann reversibel oder irreversibel bewegbar gelagert sein Die beschriebene Bewegung des Schließkörpers 15 von der Offenstellung in die Schließstellung kann daher reversibel oder irreversibel sein. Eine reversibel bewegbare Lagerung des Schließkörpers 15 bedeutet, dass der Schließkörper 15 von alleine von der Offenstellung in die Schließstellung übergehen kann. Eine irreversibel bewegbare Lagerung bedeutet, dass der Schließkörper 15 in der Schließstellung, insbesondere lösbar, über eine Schließkörperhalteeinrichtung (nicht gezeigt) halterbar oder gehaltert ist, und somit von der Schließstellung nicht von alleine in die Offenstellung übergehen kann. Eine entsprechende Schließkörperhalteeinrichtung umfasst typischerweise wenigstens ein gehäuseteilseitiges und/oder schließkörperseitiges mechanisches und/oder magnetisches Haltemittel, welches zu einer mechanischen und/oder magnetischen Halterung des Schließkörpers 15 in der Schließstellung eingerichtet ist. Die gehäuseteilseitigen bzw. schließkörperseitigen mechanischen und/oder magnetischen Haltemittel können sonach derart zusammenwirken, dass der Schließkörper 15 sicher in der Schließstellung gehaltert und ohne weiteres nicht aus dieser lösbar ist.

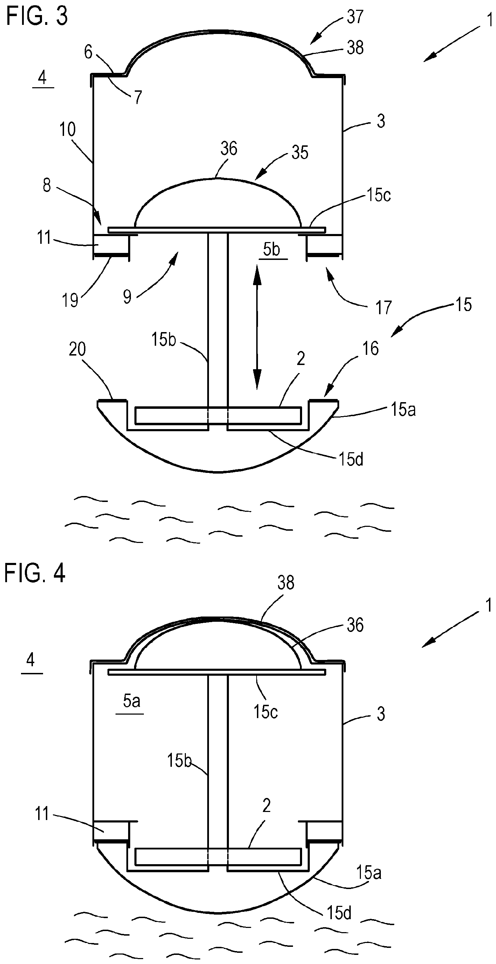

Fig. 3 zeigt eine Vorrichtung 1 gemäß einem weiteren Ausführungsbeispiel der Erfindung. Fig. 3 zeigt die Vorrichtung 1 dabei mit in der Offenstellung befindlichem Schließkörper 15. Fig. 4 zeigt das gleiche Ausführungsbeispiel mit in der Schließstellung befindlichem Schließkörper 15. Es handelt sich wiederum um Schnittansichten der Vorrichtung 1.

Im Unterschied zu den in den Fig. 1, 2 gezeigten Ausführungsbeispielen ist der schließkörperseitige Lagerungsabschnitt 15c oberseitig mit einer Sicherungskontur 35, hier in Form eines axial abragenden kalottenförmigen Vorsprungs 36, versehen. Das Gehäuseteil 3 ist entsprechend im Bereich seiner oberen Stirnseite mit einer zu der Sicherungskontur 35 gegengleich ausgebildeten Gegensicherungskontur 37, hier in Form einer kalottenförmigen Ausbuchtung 38, versehen. Die Gegensicherungskontur 37 kann in ein entsprechendes Deckelelement 6, sofern vorhanden, integriert sein.

Die lagerungsabschnittseitige Sicherungskontur 35 und die gehäuseteilseitige Gegensicherungskontur 37 fluchten axial miteinander. Entsprechend greift die lagerungsabschnittseitige Sicherungskontur 35 in der Schließstellung des Schließkörpers 15 in die gehäuseteilseitige Gegensicherungskontur 37 ein. Die lagerungsabschnittseitige Sicherungskontur 35 und die gehäuseteilseitige Gegensicherungskontur 37 wirken in der Schließstellung des Schließkörpers 15 sonach derart zusammen, dass der Schließkörper 15 gegenüber bezüglich der Zentralachse des Gehäuseteils 3 radialen Verschiebebewegungen gesichert gelagert ist (vgl. Fig. 4).

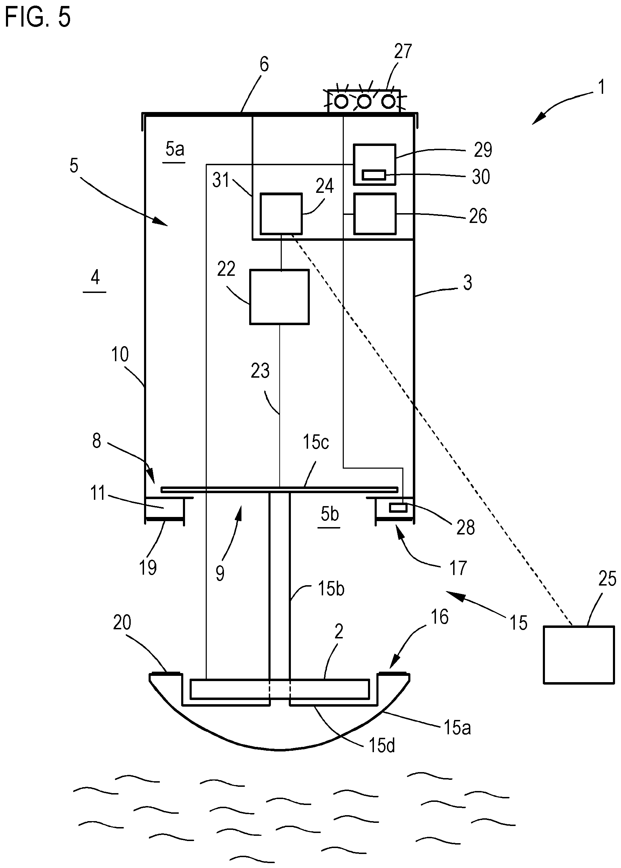

Fig. 5 zeigt eine Vorrichtung 1 gemäß einem weiteren Ausführungsbeispiel der Erfindung. Im Unterschied zu dem in den Fig. 1 - 4 gezeigten Ausführungsbeispielen umfasst die Vorrichtung 1 hier eine mit dem Schließkörper 15 gekoppelte motorische Antriebseinrichtung 22 in Form eines Elektromotors, welche(r) dazu eingerichtet ist, den Schließkörper 15 von der Offenstellung in die Schließstellung, und/oder umgekehrt, zu bewegen. Eine Bewegung des Schließkörpers 15 von der Offenstellung in die Schließstellung kann hier also gezielt durch eine mit dem Schließkörper 15 gekoppelte motorische Antriebseinrichtung 22 induziert werden. Die Kopplung zwischen der motorischen Antriebseinrichtung 22 und dem Schließkörper 15 ist über ein Zugmittel 23, z. B. in Form einer Kette, realisiert. Das Zugmittel 23 greift an dem schließkörperseitigen Lagerungsabschnitt 15c an. Selbstverständlich kann der Grundkörper 15a des Schließkörpers 15 auch in diesem Ausführungsbeispiel als Schwimmkörper ausgebildet sein.

Die Steuerung des Betriebs der motorischen Antriebseinrichtung 22 erfolgt über eine dieser zugeordnete Steuereinrichtung 24, welche zur Erzeugung von den Betrieb der motorischen Antriebseinrichtung 22 steuernden Steuerinformationen eingerichtet ist.

Die Steuereinrichtung 24 ist weiter dazu eingerichtet, die Steuerinformationen in Abhängigkeit einer von einer Wasserstandserfassungseinrichtung 25 zur Erfassung des Wasserstands in dem die Vorrichtung 1 aufnehmenden Kanalschacht gelieferten, den oder einen Wasserstand in dem Kanalschacht beschreibenden Wasserstandsinformation zu erzeugen. Mithin kann eine Steuerung des Betriebs der motorischen Antriebseinrichtung 22 in Abhängigkeit des über eine entsprechende Wasserstandserfassungseinrichtung 25 erfassten und in einer entsprechenden Wasserstandsinformation abgebildeten Wasserstands in dem die Vorrichtung 1 aufnehmenden Kanalschacht erfolgen.

In dem in Fig. 3 gezeigten Ausführungsbeispiel ist die Wasserstandserfassungseinrichtung 25 extern, d. h. räumlich getrennt zu der Vorrichtung 1 angeordnet. Die Steuereinrichtung 24 ist dazu eingerichtet, mit der (externen) Wasserstandserfassungseinrichtung 25, z. B. funkbasiert, zu kommunizieren. Hierfür umfasst die Steuereinrichtung 24 eine geeignete Empfangseinrichtung (nicht gezeigt) und die Wasserstandserfassungseinrichtung 25 eine geeignete Sendeeinrichtung (nicht gezeigt). Die oder eine entsprechende Wasserstandserfassungseinrichtung 25 kann jedoch prinzipiell auch in die Vorrichtung 1 integriert sein.

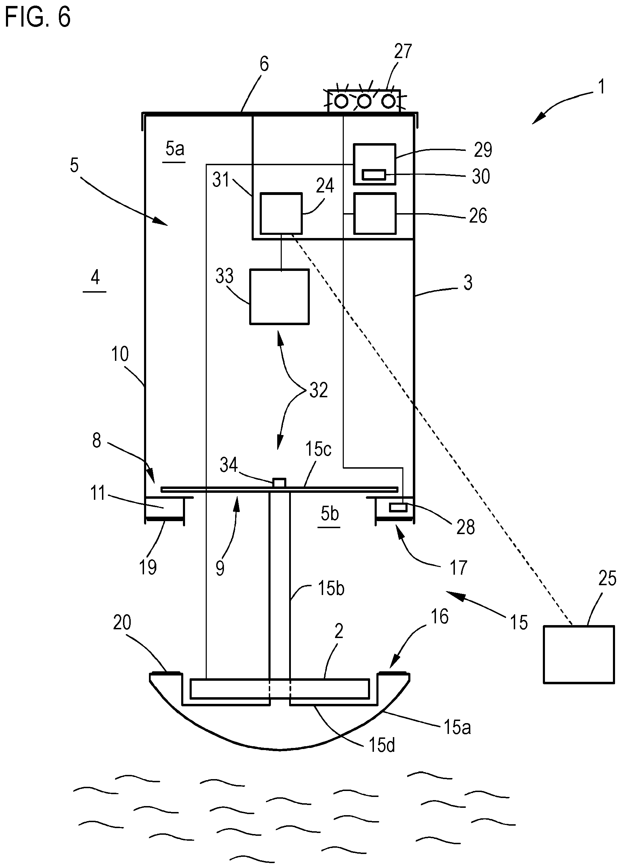

Fig. 6 zeigt eine Vorrichtung 1 gemäß einem weiteren Ausführungsbeispiel der Erfindung. Im Unterschied zu dem in Fig. 5 gezeigten Ausführungsbeispiel ist hier keine motorische Antriebseinrichtung 22, sondern eine magnetische Antriebseinrichtung 32 vorgesehen. Die magnetische Antriebseinrichtung 32 umfasst ein in dem oberen Bereich 5a des Innenraums 5 angeordnetes elektromagnetisches Magnetelement 33 und ein schließkörperseitig, d. h. hier lagerungsabschnittseitig, angeordnetes permanentmagnetisches Magnetelement 34. Das gehäuseteilseitige permanentmagnetische Magnetelement 33 übt bei Bestromung eine derart hohe magnetische Anziehungskraft auf das schließkörperseitige permanentmagnetische Magnetelement 34 aus, dass der Schließkörper 15 von der Offenstellung in die Schließstellung bewegt wird. Der Betrieb des elektromagnetischen Magnetelements 33, d. h. insbesondere dessen Bestromung, wird gleichermaßen über die Steuereinrichtung 24 gesteuert. Es gelten die diesbezüglichen Ausführungen im Zusammenhang mit der Steuerung des Betriebs der motorischen Antriebseinrichtung 22 analog.

Alternativ zu der in dem in Fig. 6 gezeigten Ausführungsbeispiel gezeigten Konfiguration entsprechender elektromagnetischer Magnetelemente 33 bzw. permanentmagnetischer Magnetelemente 34 ist es auch möglich, gehäuseteilseitig permanentmagnetische Magnetelemente 34 und schließkörperseitig elektromagnetische Magnetelemente 33 vorzusehen. Denkbar ist es auch, sowohl gehäuseteilseitig als auch schließkörperseitig elektromagnetische oder permanentmagnetische Magnetelemente 33, 34 vorzusehen.

Wie der besseren Übersichtlichkeit halber lediglich in den in den Fig. 5, 6 gezeigten Ausführungsbeispielen gezeigt, kann die Vorrichtung 1 ferner eine Schließstellungserfassungseinrichtung 26 zur Erfassung der Schließstellung des Schließkörpers 15 umfassen. Die Schließstellungserfassungseinrichtung 26 ist dazu eingerichtet, bei Erfassung der Schließstellung des Schließkörpers 15 wenigstens eine akustische und/oder optische Schließstellungsinformation zu erzeugen und über ein Ausgabemittel 27, bei welchem es sich z. B. um einen Lautsprecher und/oder eine, insbesondere mehrfarbige, LED handelt, auszugeben. Die Schließstellungserfassungseinrichtung 26 umfasst eine Sensorik 28 zur Erfassung der Schließstellung des Schließkörpers 15. Die hier in die gehäuseteilseitigen Anlageabschnitte 17 integrierte, z. B. als Drucksensorik ausgebildete bzw. eingerichtete, Sensorik 28 erfasst ein Anliegen der schließkörperseitigen Schließabschnitte 16 an den gehäuseteilseitigen Anlageabschnitten 17.

Wie der besseren Übersichtlichkeit halber wiederum lediglich in den in den Fig. 5, 6 gezeigten Ausführungsbeispielen gezeigt, kann die Vorrichtung 1 auch eine Anbisserfassungseinrichtung 29 zur Erfassung eines Köderanbisses umfassen. Die Anbisserfassungseinrichtung 29 ist dazu eingerichtet, bei Erfassung eines angebissenen Köders 2 wenigstens eine akustische und/oder optische Anbissinformation zu erzeugen und über das Ausgabemittel 27 auszugeben. Die Anbisserfassungseinrichtung 29 umfasst demzufolge eine Sensorik 30 zur Erfassung eines Köderanbisses. Die Sensorik 30 kann beispielsweise das Gewicht des Köders 2 erfassen, wobei anbissbedingte Gewichtsänderungen des Köders 2 Rückschlüsse auf einen Köderanbiss zulassen. Gleichermaßen kann die Sensorik 30 anbissbedingte, auf den Köder 2 wirkende Kräfte, insbesondere Zugkräfte, erfassen, welche ebenso Rückschlüsse auf einen Köderanbiss zulassen.

Die Anbisserfassungseinrichtung 29 kann in Abhängigkeit der Anbissinformation unterschiedliche akustische und/oder optische Signale erzeugen. Im Hinblick auf die Ausgabe entsprechender Anbissinformationen in Form von optischen Signalen ist es denkbar, dass das Gewicht eines neuen, nicht angebissenen Köders 2 z. B. mit optischen Signalen grüner Farbe und/oder mit dauerhaft konstant ausgegebenen optischen Signalen signalisiert werden kann. Das Gewicht eines teilangebissenen Köders 2 kann z. B. mit optischen Signalen gelber Farbe und/oder mit einer ersten Blinkfrequenz ausgegebenen optischen Signalen signalisiert werden. Ist der Köder 2 vollständig aufgefressen, kann dies z. B. durch optische Signale roter Farbe und/oder mit einer im Vergleich zu der ersten Blinkfrequenz höheren zweiten Blinkfrequenz ausgegebenen optischen Signalen signalisiert werden. Gleiches gilt selbstverständlich für die Ausgabe akustischer Signale, wobei insbesondere die Frequenz und/oder der Rhythmus eines Tons bzw. einer Tonfolge in Abhängigkeit des Gewichts des Köders 2 respektive der auf den Köder 2 wirkenden Kräfte variierbar sind.

Entgegen der in den in den Fig. gezeigten Ausführungsbeispielen gezeigten Anordnung des Ausgabemittels 27 an dem Gehäuseteil 3 ist es auch möglich, dass das oder ein Ausgabemittel 27 in ein externes mobiles Endgerät (nicht gezeigt), wie z. B. ein Smartphone, integriert ist. In diesem Fall ist die Schließstellungserfassungseinrichtung 26 und/oder die Anbisserfassungseinrichtung 29 dazu eingerichtet, mit dem externen mobilen Endgerät zu kommunizieren und die Schließstellungsinformation und/oder die Anbissinformation an das externe mobile Endgerät zur Ausgabe an dem dortigen Ausgabemittel zu übertragen. Die Kommunikation ist insbesondere funkbasiert, d. h. z. B. per Bluetooth, WLAN etc. realisiert, weshalb die Schließstellungserfassungseinrichtung 26 und/oder die Anbisserfassungseinrichtung 29 entsprechende funkbasierte Sendeeinrichtungen umfassen.

Ersichtlich ist in dem gehäuseteilseitigen Innenraum 5 eine optionale Aufnahmekammer 31 ausgebildet, in welcher elektrische und/oder elektronische Komponenten der Vorrichtung 1, d. h. insbesondere die Steuereinrichtung 24 und entsprechende Erfassungseinrichtungen 26, 29 sowie gegebenenfalls Einrichtungen zu deren elektrischer Versorgung, wie z. B. elektrische Energiespeicher, angeordnet sind. Die Aufnahmekammer 31 bietet einen Schutz dieser Komponenten gegenüber äußeren, d. h. insbesondere klimatischen und mechanischen, Einflüssen.

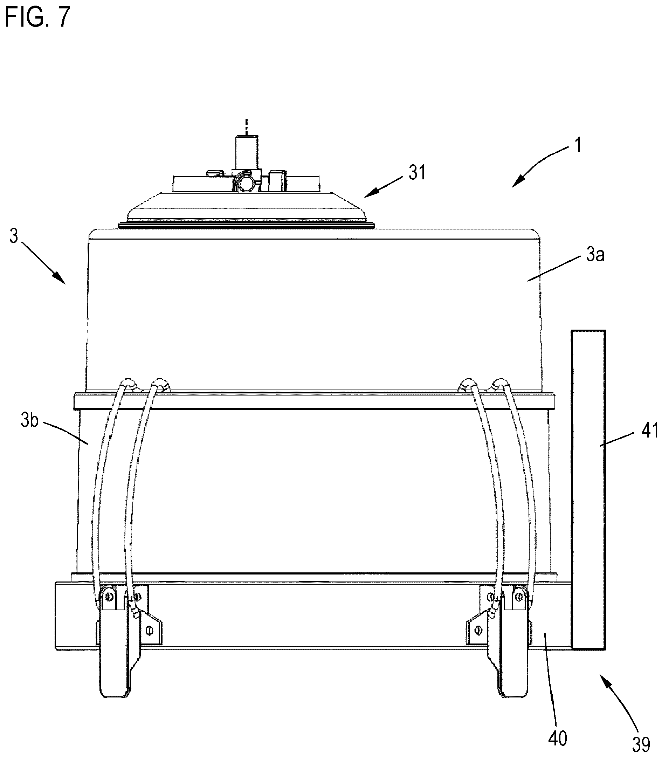

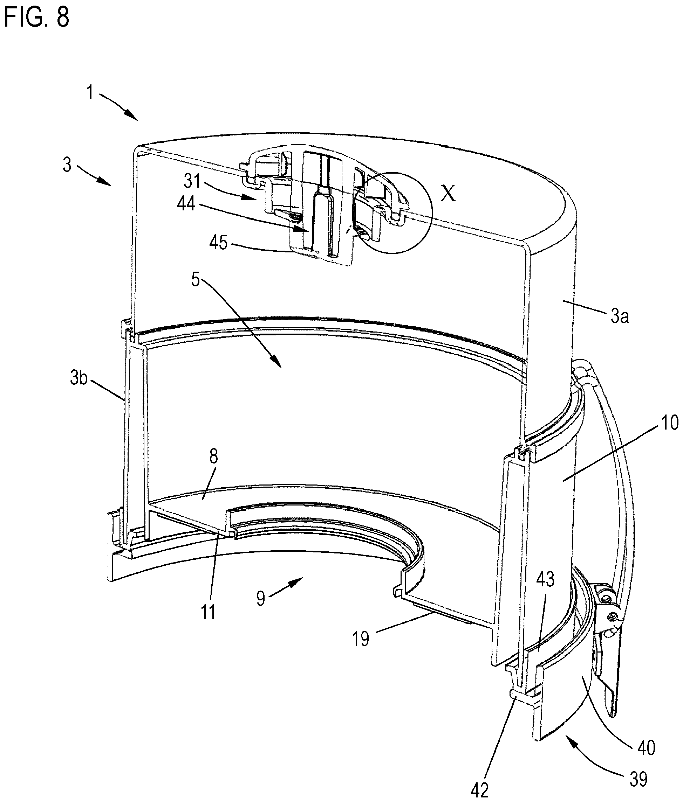

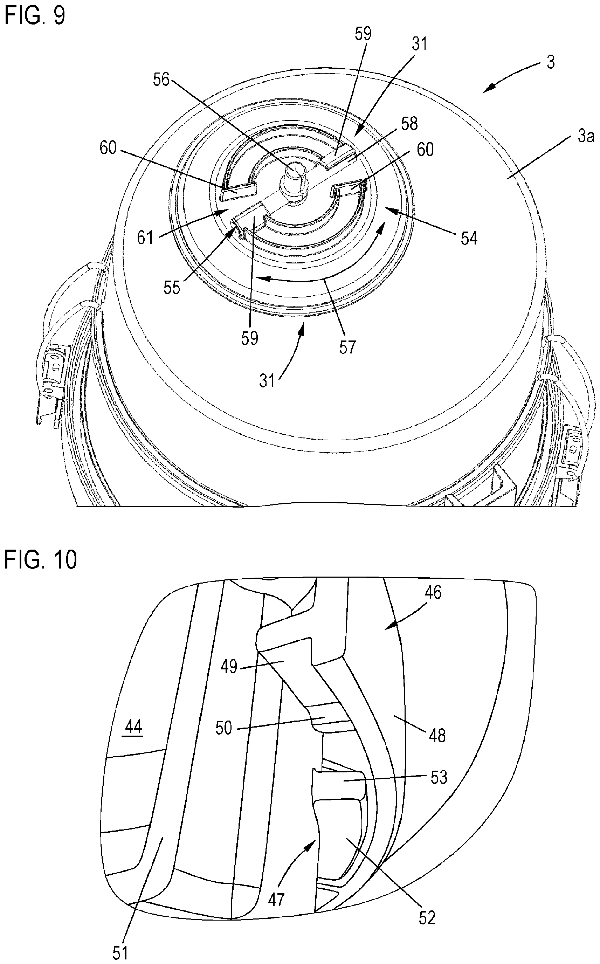

Die Fig. 7 - 10 zeigen jeweils eine Prinzipdarstellung einer Vorrichtung 1 zur Halterung eines Köders 2 gemäß einem weiteren Ausführungsbeispiel der Erfindung. Ersichtlich handelt es sich bei Fig. 7 um eine perspektivische Teilansicht der Vorrichtung 1 ohne Schließkörper 15, bei Fig. 8 um einen Längsschnitt durch die in Fig. 7 gezeigte Vorrichtung 1, bei Fig. 9 um eine Aufsicht auf die Vorrichtung 1 und bei Fig. 10 um eine vergrößerte Ansicht der in Fig. 8 gezeigten Einzelheit X.

Der Schließkörper 15 ist in den Fig. 7 - 10 deshalb nicht gezeigt, da anhand dieser Fig. insbesondere im Zusammenhang mit einer besonderen Ausführungsform einer Aufnahmekammer 31 stehende technische Aspekte der Vorrichtung 1 veranschaulicht werden sollen.

Wie sich aus dem in den Fig. 7 - 10 gezeigten Ausführungsbeispiel ergibt, kann das der Vorrichtung 1 zugehörige Gehäuseteil 3 auch mehrteilig ausgeführt sein. Das Gehäuseteil 3 ist hier aus einem oberen Gehäuseteilsegment 3a und einem unteren Gehäuseteilsegment 3b ausgeführt. Die Gehäuseteilsegmente 3a, 3b sind hier über nicht näher bezeichnete Halteklammern aneinander befestigt. Selbstverständlich sind andere Befestigungsprinzipien zur Befestigung der Gehäuseteilsegmente 3a, 3b aneinander möglich.

An dem Außenumfang des unteren Gehäuseteilsegments 3b ist im Bereich des dem oberen Gehäuseteilsegment 3a abgewandten Endes zudem eine gehäuseteilseitige Befestigungseinrichtung 39, über welche das Gehäuseteil 3, insbesondere lösbar, an einer Wandung der Kanalisation 4 befestigbar bzw. befestigt ist, angeordnet.

Die Befestigungseinrichtung 39 umfasst hier ein äußeres, z. B. aus Stahl, gebildetes Ringelement 40. Das Ringelement 40 lässt sich über eine in Fig. 7 gezeigte profilartige Halterung 41 an der Wandung eines Kanalschachts befestigen. Von dem Ringelement 40 geht in radialer Richtung ein ringscheibenförmiger Haltesteg 42 ab. Der Haltesteg 42 stützt ein an der Außenwand 10 des Gehäuseteils 3, d. h. der Außenwand 10 des unteren Gehäuseteilsegments 3b, befestigtes optionales Sicherungselement 43 ab. Das hier ebenso ringförmig ausgeführte Sicherungselement 43 ist vermittels eines Rastmechanismus an dem Gehäuseteil 3, d. h. der gehäuseteilseitigen Außenwand 10, befestigt. Der Rastmechanismus ist durch das Zusammenwirken gehäuseaußenwandseitiger Rastelemente in Form von nicht näher gezeigten Rastvorsprüngen und sicherungselementseitigen Gegenrastelementen in Form von nicht näher gezeigten Rastausnehmungen realisiert, in welchen die gehäuseaußenwandseitigen Rastelemente verrasten können. Selbstverständlich ist auch eine umgekehrte Anordnung, d. h. gehäuseaußenwandseitige Rastelemente in Form von Rastausnehmungen und sicherungselementseitige Rastelemente in Form von Rastvorsprüngen, denkbar.

In dem eine Oberseite bzw. Stirnseite des Gehäuseteils 3, d. h. des oberen Gehäuseteilsegments 3a, bildenden Bereich ist eine zylinderartige Aufnahmekammer 31 angeordnet. Die Aufnahmekammer 31 weist einen einen zylinderartigen, ein Aufnahmekammervolumen 44 zur Aufnahme elektrischer und/oder elektronischer Komponenten der Vorrichtung 1 begrenzenden Aufnahmekammergrundkörper 45 auf. Ersichtlich ragt der Aufnahmekammergrundkörper 45 abschnittsweise in den gehäuseteilseitigen Aufnahmeraum 5.

An einem in den gehäuseteilseitigen Aufnahmeraum 5 ragenden unteren Abschnitt des Aufnahmekammergrundkörpers 45 kann eine nicht gezeigte Köderhalteinrichtung zur Halterung eines weiteren Köders 2 angeordnet sein.

Die Aufnahmekammer 31 ist lösbar an dem Gehäuseteil 3, d. h. hier dem oberen Gehäuseteilsegment 3a, befestigbar. Die lösbare Befestigung der Aufnahmekammer 31 an dem Gehäuseteil 3 ist durch formschlüssiges Zusammenwirken gehäuseteilseitiger Befestigungsabschnitte 46 mit aufnahmekammergrundkörperseitigen Befestigungsabschnitten 47 ausbildbar oder ausgebildet. Die Aufnahmekammer 31 und das Gehäuseteil 3 sind also jeweils mit Befestigungsabschnitten 46, 47 ausgestattet, über deren Zusammenwirken sich eine stabile bzw. unverlierbare, gleichwohl lösbare Befestigung der Aufnahmekammer 31 an dem Gehäuseteil 3 realisieren lässt. Wie sich insbesondere anhand von Fig. 10 ergibt, ist unter einem formschlüssigen Zusammenwirken jeweiliger Befestigungsabschnitte 46, 47 ein zumindest abschnittsweises Ineinander- oder Übereinandergreifen entsprechender Befestigungsabschnitte 46, 47 zu verstehen.

Die Aufnahmekammer 31 ist zwischen einer Befestigungsstellung und einer Lösestellung drehbar gelagert an dem Gehäuseteil 3 angeordnet. In der Befestigungsstellung wirken die gehäuseteilseitigen Befestigungsabschnitte 46 und die aufnahmekammergrundkörperseitigen Befestigungsabschnitte 47 formschlüssig zusammen, so dass die Aufnahmekammer 31 lösbar an dem Gehäuseteil 3 befestigt ist. In der Lösestellung wirken die gehäuseteilseitigen Befestigungsabschnitte 46 und die aufnahmekammergrundkörperseitigen Befestigungsabschnitte 47 nicht zusammen, so dass die Aufnahmekammer 31 von dem Gehäuseteil 3 lösbar ist. Die Befestigung der Aufnahmekammer 31 an dem Gehäuseteil 3 kann sonach durch Drehbewegungen der Aufnahmekammer 31 um eine Drehachse, welche typischerweise mit der Zentralachse der Aufnahmekammer 31 zusammenfällt, relativ zu dem Gehäuseteil 3 hergestellt und wieder aufgehoben werden. Die Aufnahmekammer 31 kann also durch Drehbewegungen relativ zu dem Gehäuseteil 3 von der Befestigungsstellung in die Lösestellung, und umgekehrt, überführt werden.

Wie sich aus Fig. 10 ergibt, sind die gehäuseteilseitigen Befestigungsabschnitte 46 als ein von einem axial ausgerichteten zylinderartigen Abschnitt 48 des Gehäuseteils 3 radial nach innen abragendes Ringsegmentscheibenelement 49 mit wenigstens einem von diesem axial abragenden schulterartigen Befestigungsvorsprung 50 ausgebildet. Die aufnahmekammergrundkörperseitigen Befestigungsabschnitte 47 sind als ein von einem zylinderartigen Ansatz 51 des Aufnahmekammergrundkörpers 45 radial nach außen abragendes Ringsegmentscheibenelement 52 mit einem zu dem an dem gehäuseteilseitigen Befestigungsabschnitt 46 gebildeten Befestigungsvorsprung 50 korrespondierenden, d. h. gegengleich ausgebildeten bzw. ausgerichteten, axial abragenden schulterartigen Befestigungsvorsprung 53 ausgebildet.

Zur Realisierung entsprechender Drehbewegungen der Aufnahmekammer 31 relativ zu dem Gehäuseteil 3 weist die Aufnahmekammer 31 im Bereich eines in Fig. 9 gezeigten oberen freiliegenden Deckabschnitts 54 einen Werkzeugangriffsbereich 55 auf, in welchen ein hier T-förmiges Werkzeug 56 mit einem Eingriffsabschnitt 58 formschlüssig eingreifen kann. Über das wie in Fig. 9 gezeigt in den Werkzeugangriffsbereich 55 eingreifende Werkzeug 56 lassen sich Drehbewegungen auf die Aufnahmekammer 31 übertragen, um die Aufnahmekammer 31 von der Befestigungsstellung in die Lösestellung, und umgekehrt, zu überführen. Ersichtlich ist der Werkzeugangriffsbereich 55 hier mit ringsegmentförmigen Werkzeugaufnahmen 59 ausgebildet, in welche der querschnittlich rundlich gestaltete werkzeugseitige Eingriffsabschnitt 58 eingreifen kann, so dass Drehbewegungen des Werkzeugs 56 gegen den Uhrzeigersinn zu Drehbewegungen der Aufnahmekammer 31 gegen den Uhrzeigersinn führen.

Dem Eingriffsabschnitt 58 umfangsmäßig gegenüber liegend angeordnet ist ein Anschlagabschnitt 60 ausgebildet. Zwischen dem Eingriffsabschnitt 59 und dem Anschlagabschnitt 60 ist ein sich umfangsmäßig erstreckender Spaltraum 61 gebildet, über welchen das Werkzeug 56 in den Werkzeugangriffsbereich 55 eingeführt werden kann, um mit diesem entsprechend zusammenzuwirken.

Durch die Anordnung bzw. Ausbildung des Werkzeugangriffsbereichs 55 im Bereich eines oberen freiliegenden Deckabschnitts 54 der Aufnahmekammer 31 ist der Werkzeugangriffsbereich 55 stets (von oben) zugänglich. Die geometrische Gestalt des Werkzeugangriffsbereichs 55 ist an die Gestalt des Werkzeugs 56 angepasst. Vorliegend ist die geometrische Gestalt des Werkzeugangriffsbereichs 55 derart, dass ein T-Förmiges Werkzeug 56 formschlüssig an diesem angreifen kann, so dass über durch den Doppelpfeil 57 angedeutete Drehbewegungen des Werkzeugs 56 Drehbewegungen auf die Aufnahmekammer 31 übertragen werden können.

Entsprechend ist der Werkzeugangriffsbereich 55 im ordnungsgemäß in einen Kanalschacht eingesetzten Zustand der Vorrichtung 1 gut, d. h. insbesondere von oben, zugänglich. Durch geeignete Formgebung und Dimensionierung eines entsprechenden Werkzeugs 56 ist es nicht zwingend notwendig, dass ein Benutzer in den Kanalschacht hinabsteigt, um die Aufnahmekammer 31 durch entsprechende Drehbewegungen von der Befestigungsstellung in die Lösestellung, oder umgekehrt, zu überführen. Die Aufnahmekammer 31 kann sonach von außerhalb des Kanalschachts von dem Gehäuseteil 3 gelöst und gegebenenfalls aus dem Kanalschacht entnommen werden. Dies kann zu Kontrollzwecken, z. B. dahin, ob ein Köderanbiss erfolgt ist, praktikabel sein, so dass Kontrollen erheblich vereinfacht und erheblich zügiger durchgeführt werden können. Die Aufnahmekammer 31 kann also ohne Einstieg in den Kanalschacht aus dem Kanalschacht entnommen und wieder in den Kanalschacht eingebracht werden.

Wenngleich das Gehäuseteil 3 in den in den Fig. gezeigten Ausführungsbeispielen in eine Kanalisation 4, d. h. z. B. einen Abwasserkanal- bzw. Abwasserkanalschacht, kurz Kanalschacht, eingesetzt ist, ist es im Allgemeinen möglich, das Gehäuseteil 3 an oder in einer Umgebung, in welcher es mit Wasser, insbesondere Regenwasser, jedoch auch, industriellem Abwasser, Mischwasser, Oberflächenwasser etc., und/oder anderen flüssigen Medien in Kontakt geraten kann, anzuordnen. Grundsätzlich ist das Gehäuseteil 3 sonach an solchen Orten anordenbar oder angeordnet, an welchen die Möglichkeit einer Kontamination von Wasser und/oder anderen flüssigen Medien mit den in dem Köder 2 enthaltenen Substanzen denkbar ist. Dies betrifft insbesondere Orte, an welchen Wasser bzw. flüssige Medien grundsätzlich vorhanden sind oder sich Wasser bzw. flüssige Medien ansammeln können.

Das Gehäuseteil 3 kann sonach z. B. auch an oder in bestimmten Bauwerken bzw. Bauwerkteilen respektive Gebäuden bzw. Gebäudeteilen im Hoch- und/oder Tiefbaubereich, wie z. B. Über- oder Unterführungen, Garagen, Kellern, Tankanlagen, Silos etc. anordenbar oder angeordnet sein. Selbstverständlich kann das Gehäuseteil 3 auch an sonstigen Vorkehrungen, welche mit Wasser, insbesondere Regenwasser, in Kontakt geraten können, wie z. B. Abfallbehältern, Bepflanzungen, z. B. Bäumen, Einfriedungen, insbesondere Mauern oder Zäune, Haltestellen für öffentliche oder private Transportmittel, Telefonzellen, Straßenbeleuchtungen, Verteiler- bzw. Versorgungskästen, anordenbar oder angeordnet sein.

Die Vorrichtung 1 respektive das Gehäuseteil 3 kann auch an oder in Transport- bzw. Verkehrsmitteln, wie z. B. Schiffen, anordenbar oder angeordnet sein.

Bestimmte Merkmale der Erfindung sind in den nachfolgenden Aspekten nochmals beispielhaft dargestellt:
1. Vorrichtung (1) zur Halterung eines Köders (2), insbesondere eines Köders für Nagetiere, gekennzeichnet durch:
   - ein Gehäuseteil (3), wobei das Gehäuseteil (3) wenigstens eine, insbesondere axiale, Durchgangsöffnung (9) aufweist, durch welche ein Zugang in einen gehäuseteilseitigen Innenraum möglich ist,
   - wenigstens einen Schließkörper (15), welcher einen Grundkörper (15a) und wenigstens einen, insbesondere grundkörperseitigen, Köderaufnahmebereich (15d) zur Aufnahme wenigstens eines Köders (2) aufweist, wobei der Schließkörper (15) relativ zu dem Gehäuseteil (3) bewegbar gelagert ist, wobei der Schließkörper (15) in einer Offenstellung derart von dem Gehäuseteil (3) weg bewegt ist, dass die wenigstens eine Durchgangsöffnung (9) freigegeben ist, und in einer Schließstellung derart gegen das Gehäuseteil (3) bewegt ist, dass die wenigstens eine Durchgangsöffnung (9) verschlossen ist.
2. Vorrichtung nach Aspekt 1, dadurch gekennzeichnet, dass der Schließkörper (15) reversibel zwischen der Offenstellung und der Schließstellung bewegbar gelagert ist oder dass der Schließkörper (15) irreversibel zwischen der Offenstellung und der Schließstellung bewegbar gelagert ist derart, dass er in der Schließstellung, insbesondere lösbar, über wenigstens eine Schließkörperhalteeinrichtung halterbar oder gehaltert ist.
3. Vorrichtung nach Aspekt 2, dadurch gekennzeichnet, dass die Schließkörperhalteeinrichtung wenigstens ein gehäuseteilseitiges und/oder schließkörperseitiges mechanisches und/oder magnetisches Haltemittel umfasst, welches zu einer mechanischen und/oder magnetischen Halterung des Schließkörpers (15) in der Schließstellung eingerichtet ist.
4. Vorrichtung nach einem der vorangehenden Aspekte, dadurch gekennzeichnet, dass der Grundkörper (15a) des Schließkörpers (15) als Schwimmkörper ausgebildet ist oder wenigstens einen Schwimmkörper umfasst.
5. Vorrichtung nach einem der vorangehenden Aspekte, gekennzeichnet durch wenigstens eine mit dem Schließkörper (15) koppelbare oder gekoppelte Antriebseinrichtung, welche dazu eingerichtet ist, den Schließkörper (15) von der Offenstellung in die Schließstellung, und/oder umgekehrt, zu bewegen.
6. Vorrichtung nach Aspekt 5, dadurch gekennzeichnet, dass die oder eine Antriebseinrichtung als motorische Antriebseinrichtung (22) ausgebildet ist oder wenigstens eine solche umfasst.
7. Vorrichtung nach Aspekt 5 oder 6, dadurch gekennzeichnet, dass die oder eine Antriebseinrichtung als magnetische Antriebseinrichtung (32) ausgebildet ist oder wenigstens eine solche umfasst.
8. Vorrichtung nach Aspekt 7, dadurch gekennzeichnet, dass die magnetische Antriebseinrichtung (32) wenigstens ein magnetisierbares und/oder magnetisches, insbesondere wenigstens ein elektromagnetisches und/oder permanentmagnetisches, Magnetelement (33, 34) seitens des Gehäuseteils (3) und seitens des Schließkörpers (15) umfasst.
9. Vorrichtung nach einem der Aspekte 5 bis 8, gekennzeichnet durch eine der wenigstens einen Antriebseinrichtung zugeordnete Steuereinrichtung (24) zur Erzeugung von den Betrieb der Antriebseinrichtung steuernden Steuerinformationen, wobei die Steuereinrichtung (24) dazu eingerichtet ist, die Steuerinformationen in Abhängigkeit einer von einer Wasserstandserfassungseinrichtung (25) zur Erfassung des Wasserstands in einer die Vorrichtung (1) aufnehmenden Umgebung, insbesondere einem Kanalschacht, gelieferten, den oder einen Wasserstand in der die Vorrichtung (1) aufnehmenden Umgebung beschreibenden Wasserstandsinformation zu erzeugen.
10. Vorrichtung nach einem der vorangehenden Aspekte, gekennzeichnet durch eine Schließstellungserfassungseinrichtung (26) zur Erfassung der Schließstellung des Schließkörpers (15), welche dazu eingerichtet ist, bei Erfassung der Schließstellung des Schließkörpers (15) wenigstens eine akustische und/oder optische Schließstellungsinformation zu erzeugen und über wenigstens ein Ausgabemittel (27) auszugeben.
11. Vorrichtung nach einem der vorangehenden Aspekte, gekennzeichnet durch wenigstens eine Anbisserfassungseinrichtung (29) zur Erfassung eines Köderanbisses, wobei die Anbisserfassungseinrichtung (29) dazu eingerichtet ist, bei Erfassung eines angebissenen Köders (2) wenigstens eine akustische und/oder optische Anbissinformation zu erzeugen und über wenigstens ein Ausgabemittel (27) auszugeben.
12. Vorrichtung nach Aspekt 10 oder 11, dadurch gekennzeichnet, dass das oder ein Ausgabemittel (27) an oder in dem Gehäuseteil (3) angeordnet ist, wobei es an einer freiliegenden Außenfläche des Gehäuseteils (3) oder innerhalb des gehäuseteilseitigen Innenraums (5) angeordnet ist.
13. Vorrichtung nach einem der Aspekte 10 bis 12, dadurch gekennzeichnet, dass das oder ein Ausgabemittel (27) in ein externes mobiles Endgerät integriert ist, wobei die Schließstellungserfassungseinrichtung (26) und/oder die Anbisserfassungseinrichtung (29) dazu eingerichtet ist, mit dem externen mobilen Endgerät zu kommunizieren und die Schließstellungsinformation und/oder die Anbissinformation an das externe mobile Endgerät zur Ausgabe an dem dortigen Ausgabemittel zu übertragen.
14. Vorrichtung nach einem der vorangehenden Aspekte, dadurch gekennzeichnet, dass der Köderaufnahmebereich (15d) durch wenigstens eine abschnittsweise Vertiefung des Grundkörpers (15a) des Schließkörpers (15) gebildet ist.
15. Vorrichtung nach einem der vorangehenden Aspekte, dadurch gekennzeichnet, dass der Grundkörper (15a) des Schließkörpers (15) wenigstens einen Schließabschnitt (16) aufweist, welcher in der Schließstellung des Schließkörpers (15) abschnittsweise dichtend an gehäuseteilseitigen Anlageabschnitten (17) anliegt.
16. Vorrichtung nach einem der vorangehenden Aspekte, dadurch gekennzeichnet, dass der Grundkörper (15a) des Schließkörpers (15) einen mit diesem über wenigstens einen Verbindungssteg (15b) verbundenen, zu dem Grundkörper (15a) beabstandeten Lagerungsabschnitt (15c) zur Lagerung des Schließkörpers (15) an dem Gehäuseteil (3) umfasst.
17. Vorrichtung nach Aspekt 16, dadurch gekennzeichnet, dass der Lagerungsabschnitt (15c) so bemessen ist, dass er durch Kippbewegungen des Schließkörpers (15) relativ zu dem Gehäuseteil (3) durch die gehäuseteilseitige Durchgangsöffnung (9) bewegbar ist.
18. Vorrichtung nach Aspekt 16 oder 17, dadurch gekennzeichnet, dass der Lagerungsabschnitt (15c) mit wenigstens einer Sicherungskontur (35) und das Gehäuseteil (3) mit wenigstens einer hierzu gegengleich ausgebildeten Gegensicherungskontur (37) versehen ist, wobei die Sicherungskontur (35) und die Gegensicherungskontur (37) in der Schließstellung des Schließkörpers (15) derart zusammenwirken, dass der Schließkörper (15) gegenüber bezüglich der Zentralachse des Gehäuseteils (3) radialen Verschiebebewegungen gesichert gelagert ist.
19. Vorrichtung nach Aspekt 18, dadurch gekennzeichnet, dass die wenigstens oder wenigstens eine lagerungsabschnittseitige Sicherungskontur (35) durch einen von dem Lagerungsabschnitt (15c) bezüglich der Zentralachse des Schließkörpers (15) axial abragenden, insbesondere kalotten- oder keilförmigen, Vorsprung (36) und die wenigstens eine oder wenigstens eine gehäuseteilseitige Gegensicherungskontur (37) durch eine, insbesondere kalotten- oder keilförmige, Ausbuchtung oder Ausnehmung (38) gebildet ist, oder
   die wenigstens eine oder wenigstens eine lagerungsabschnittseitige Sicherungskontur (35) durch eine, insbesondere kalotten- oder keilförmige, Ausbuchtung oder Ausnehmung und die wenigstens eine oder wenigstens eine gehäuseteilseitige Gegensicherungskontur (37) durch einen von dem Gehäuseteil (3) bezüglich der Zentralachse des Gehäuseteils (3) axial abragenden, insbesondere kalotten- oder keilförmigen, Vorsprung gebildet ist.
20. Vorrichtung nach einem der vorangehenden Aspekte, dadurch gekennzeichnet, dass in dem gehäuseteilseitigen Innenraum (5) wenigstens eine Aufnahmekammer (31) ausgebildet oder angeordnet ist, in welcher elektrische und/oder elektronische Komponenten der Vorrichtung (1), insbesondere Steuereinrichtungen und Erfassungseinrichtungen, anordenbar oder angeordnet sind.
21. Vorrichtung nach einem der vorangehenden Aspekte, dadurch gekennzeichnet, dass die oder eine Aufnahmekammer (31), in welcher elektrische und/oder elektronische Komponenten der Vorrichtung (1), insbesondere Steuereinrichtungen und Erfassungseinrichtungen, anordenbar oder angeordnet sind, einen, insbesondere zylinderartigen, ein Aufnahmekammervolumen (44) zur Aufnahme elektrischer und/oder elektronischer Komponenten der Vorrichtung (1) begrenzenden Aufnahmekammergrundkörper (45) aufweist, welcher zumindest abschnittsweise in einen gehäuseteilseitigen Aufnahmeraum (5) ragt.
22. Vorrichtung nach Aspekt 21, dadurch gekennzeichnet, dass die Aufnahmekammer (31) lösbar an dem Gehäuseteil (3) befestigbar ist, wobei die lösbare Befestigung der Aufnahmekammer (31) an dem Gehäuseteil (3) durch, insbesondere formschlüssiges, Zusammenwirken wenigstens eines gehäuseteilseitigen Befestigungsabschnitts (46) mit wenigstens einem aufnahmekammergrundkörperseitigen Befestigungsabschnitt (47) ausbildbar oder ausgebildet ist.
23. Vorrichtung nach Aspekt 22, dadurch gekennzeichnet, dass die Aufnahmekammer (31) zwischen einer Befestigungsstellung, in welcher der wenigstens eine gehäuseteilseitige Befestigungsabschnitt (46) und der wenigstens eine aufnahmekammergrundkörperseitige Befestigungsabschnitt (47), insbesondere formschlüssig, zusammenwirken, so dass die Aufnahmekammer (31) lösbar an dem Gehäuseteil (3) befestigt ist, und einer Lösestellung, in welcher der wenigstens eine gehäuseteilseitige Befestigungsabschnitt (46) und der wenigstens eine aufnahmekammergrundkörperseitige Befestigungsabschnitt (47) nicht zusammenwirken, so dass die Aufnahmekammer (31) von dem Gehäuseteil (3) lösbar ist, relativ zu dem Gehäuseteil (3) drehbar gelagert an dem Gehäuseteil (3) anordenbar oder angeordnet ist.
24. Vorrichtung nach Aspekt 23, dadurch gekennzeichnet, dass die Aufnahmekammer (31) im Bereich eines oberen freiliegenden Deckabschnitts (54) wenigstens einen Werkzeugangriffsbereich (55) zum formschlüssigen Eingreifen eines Werkzeugs (56) aufweist, über welches Werkzeug (56) sich Drehbewegungen auf die Aufnahmekammer (31) übertragen lassen, um die Aufnahmekammer (31) von der Befestigungsstellung in die Lösestellung, und umgekehrt, zu überführen.
25. Vorrichtung nach Aspekt 23 oder 24, dadurch gekennzeichnet, dass der wenigstens eine gehäuseteilseitige Befestigungsabschnitt (46) als ein von einem zylinderartigen Abschnitt (48) des Gehäuseteils (3) radial abragendes Ringscheibenelement mit wenigstens einem von diesem axial abragenden schulterartigen Befestigungsvorsprung (50) ausgebildet ist und der wenigstens eine aufnahmekammergrundkörperseitige Befestigungsabschnitt (47) als ein von einem zylinderartigen Ansatz (51) des Aufnahmekammergrundkörpers (45) radial abragendes Ringscheibenelement mit einem korrespondierenden axial abragenden schulterartigen Befestigungsvorsprung (53) ausgebildet ist.

## Patentansprüche

1. Vorrichtung (1) zur Halterung eines Köders (2), insbesondere eines Köders für Nagetiere, **gekennzeichnet durch**:
- ein Gehäuseteil (3), wobei das Gehäuseteil (3) wenigstens eine, insbesondere axiale, Durchgangsöffnung (9) aufweist, durch welche ein Zugang in einen gehäuseteilseitigen Innenraum möglich ist,
- wenigstens einen Schließkörper (15), welcher einen Grundkörper (15a) und wenigstens einen, insbesondere grundkörperseitigen, Köderaufnahmebereich (15d) zur Aufnahme wenigstens eines Köders (2) aufweist, wobei der Schließkörper (15) relativ zu dem Gehäuseteil (3) bewegbar gelagert ist, wobei der Schließkörper (15) in einer Offenstellung derart von dem Gehäuseteil (3) weg bewegt ist, dass die wenigstens eine Durchgangsöffnung (9) freigegeben ist, und in einer Schließstellung derart gegen das Gehäuseteil (3) bewegt ist, dass die wenigstens eine Durchgangsöffnung (9) verschlossen ist, wobei
- der Grundkörper (15a) des Schließkörpers (15) einen mit diesem über wenigstens einen Verbindungssteg (15b) verbundenen, zu dem Grundkörper (15a) beabstandeten Lagerungsabschnitt (15c) zur Lagerung des Schließkörpers (15) an dem Gehäuseteil (3) umfasst.

2. Vorrichtung nach Anspruch 1, **dadurch gekennzeichnet, dass** der Schließkörper (15) reversibel zwischen der Offenstellung und der Schließstellung bewegbar gelagert ist oder dass der Schließkörper (15) irreversibel zwischen der Offenstellung und der Schließstellung bewegbar gelagert ist derart, dass er in der Schließstellung, insbesondere lösbar, über wenigstens eine Schließkörperhalteeinrichtung halterbar oder gehaltert ist.

3. Vorrichtung nach Anspruch 2, **dadurch gekennzeichnet, dass** die Schließkörperhalteeinrichtung wenigstens ein gehäuseteilseitiges und/oder schließkörperseitiges mechanisches und/oder magnetisches Haltemittel umfasst, welches zu einer mechanischen und/oder magnetischen Halterung des Schließkörpers (15) in der Schließstellung eingerichtet ist.

4. Vorrichtung nach einem der vorangehenden Ansprüche, **dadurch gekennzeichnet, dass** der Grundkörper (15a) des Schließkörpers (15) als Schwimmkörper ausgebildet ist oder wenigstens einen Schwimmkörper umfasst.

5. Vorrichtung nach einem der vorangehenden Ansprüche, **gekennzeichnet durch** wenigstens eine mit dem Schließkörper (15) koppelbare oder gekoppelte Antriebseinrichtung, welche dazu eingerichtet ist, den Schließkörper (15) von der Offenstellung in die Schließstellung, und/oder umgekehrt, zu bewegen.

6. Vorrichtung nach einem der vorangehenden Ansprüche, **gekennzeichnet durch** eine Schließstellungserfassungseinrichtung (26) zur Erfassung der Schließstellung des Schließkörpers (15), welche dazu eingerichtet ist, bei Erfassung der Schließstellung des Schließkörpers (15) wenigstens eine akustische und/oder optische Schließstellungsinformation zu erzeugen und über wenigstens ein Ausgabemittel (27) auszugeben.

7. Vorrichtung nach einem der vorangehenden Ansprüche, **gekennzeichnet durch** wenigstens eine Anbisserfassungseinrichtung (29) zur Erfassung eines Köderanbisses, wobei die Anbisserfassungseinrichtung (29) dazu eingerichtet ist, bei Erfassung eines angebissenen Köders (2) wenigstens eine akustische und/oder optische Anbissinformation zu erzeugen und über wenigstens ein Ausgabemittel (27) auszugeben.

8. Vorrichtung nach Anspruch 6 oder 7, **dadurch gekennzeichnet, dass** das oder ein Ausgabemittel (27) an oder in dem Gehäuseteil (3) angeordnet ist, wobei es an einer freiliegenden Außenfläche des Gehäuseteils (3) oder innerhalb des gehäuseteilseitigen Innenraums (5) angeordnet ist.

9. Vorrichtung nach einem der Ansprüche 6 bis 8, **dadurch gekennzeichnet, dass** das oder ein Ausgabemittel (27) in ein externes mobiles Endgerät integriert ist, wobei die Schließstellungserfassungseinrichtung (26) und/oder die Anbisserfassungseinrichtung (29) dazu eingerichtet ist, mit dem externen mobilen Endgerät zu kommunizieren und die Schließstellungsinformation und/oder die Anbissinformation an das externe mobile Endgerät zur Ausgabe an dem dortigen Ausgabemittel zu übertragen.

10. Vorrichtung nach einem der vorangehenden Ansprüche, **dadurch gekennzeichnet, dass** der Grundkörper (15a) des Schließkörpers (15) wenigstens einen Schließabschnitt (16) aufweist, welcher in der Schließstellung des Schließkörpers (15) abschnittsweise dichtend an gehäuseteilseitigen Anlageabschnitten (17) anliegt.

11. Vorrichtung nach einem der vorangehenden Ansprüche, **dadurch gekennzeichnet, dass** der Lagerungsabschnitt (15c) so bemessen ist, dass er durch Kippbewegungen des Schließkörpers (15) relativ zu dem Gehäuseteil (3) durch die gehäuseteilseitige Durchgangsöffnung (9) bewegbar ist.

12. Vorrichtung nach Anspruch 10 oder 11, **dadurch gekennzeichnet, dass** der Lagerungsabschnitt (15c) mit wenigstens einer Sicherungskontur (35) und das Gehäuseteil (3) mit wenigstens einer hierzu gegengleich ausgebildeten Gegensicherungskontur (37) versehen ist, wobei die Sicherungskontur (35) und die Gegensicherungskontur (37) in der Schließstellung des Schließkörpers (15) derart zusammenwirken, dass der Schließkörper (15) gegenüber bezüglich der Zentralachse des Gehäuseteils (3) radialen Verschiebebewegungen gesichert gelagert ist.

13. Vorrichtung nach einem der vorangehenden Ansprüche, **dadurch gekennzeichnet, dass** in dem gehäuseteilseitigen Innenraum (5) wenigstens eine Aufnahmekammer (31) ausgebildet oder angeordnet ist, in welcher elektrische und/oder elektronische Komponenten der Vorrichtung (1), insbesondere Steuereinrichtungen und Erfassungseinrichtungen, anordenbar oder angeordnet sind.

14. Vorrichtung nach einem der vorangehenden Ansprüche, **dadurch gekennzeichnet, dass** die oder eine Aufnahmekammer (31), in welcher elektrische und/oder elektronische Komponenten der Vorrichtung (1), insbesondere Steuereinrichtungen und Erfassungseinrichtungen, anordenbar oder angeordnet sind, einen, insbesondere zylinderartigen, ein Aufnahmekammervolumen (44) zur Aufnahme elektrischer und/oder elektronischer Komponenten der Vorrichtung (1) begrenzenden Aufnahmekammergrundkörper (45) aufweist, welcher zumindest abschnittsweise in einen gehäuseteilseitigen Aufnahmeraum (5) ragt.

15. Vorrichtung nach Anspruch 14, **dadurch gekennzeichnet, dass** die Aufnahmekammer (31) lösbar an dem Gehäuseteil (3) befestigbar ist, wobei die lösbare Befestigung der Aufnahmekammer (31) an dem Gehäuseteil (3) durch, insbesondere formschlüssiges, Zusammenwirken wenigstens eines gehäuseteilseitigen Befestigungsabschnitts (46) mit wenigstens einem aufnahmekammergrundkörperseitigen Befestigungsabschnitt (47) ausbildbar oder ausgebildet ist.
